(19) Europäisches Patentamt
European Patent Office
Office européen des brevets

(11) **EP 1 655 866 A1**

(12) **EUROPEAN PATENT APPLICATION**
published in accordance with Art. 158(3) EPC

(43) Date of publication:
**10.05.2006 Bulletin 2006/19**

(51) Int Cl.:
***H04B 10/18*** (1990.01)   ***H04B 10/04*** (1990.01)

(21) Application number: **04771538.8**

(22) Date of filing: **11.08.2004**

(86) International application number:
**PCT/JP2004/011553**

(87) International publication number:
**WO 2005/018118 (24.02.2005 Gazette 2005/08)**

(84) Designated Contracting States:
**DE FR GB**

(30) Priority: **13.08.2003 JP 2003292735**
**31.10.2003 JP 2003372026**

(71) Applicant: **NIPPON TELEGRAPH AND TELEPHONE CORPORATION**
**Tokyo 100-8116 (JP)**

(72) Inventor: **KIKUSHIMA, Koji**
**NTT Intellectual Property Center**
**Tokyo 1808585 (JP)**

(74) Representative: **Beresford, Keith Denis Lewis**
**Beresford & Co**
**16 High Holborn**
**GB-London WC1V 6BX (GB)**

(54) **DISTORTION GENERATOR CIRCUIT, PRE-DISTORTION CIRCUIT, OPTICAL SIGNAL TRANSMITTER USING THE SAME, AND OPTICAL SIGNAL TRANSMISSION SYSTEM**

(57)    It is an object of the present invention to provide a distortion generator circuit that generates a distortion substantially equal to that of an FM batch conversion circuit even when input electric signals in a wide frequency range are subjected to frequency modulation by the FM batch conversion circuit. It is another object of the present invention to provide a pre-distortion circuit that compensates for the distortion of the FM batch conversion circuit, an optical signal transmitter having less distortion, an optical signal transmission system by using the distortion generator circuit.

A distortion generator circuit of the present invention comprises a distribution circuit (21) that distributes an input electric signal into two electric signals, an FM batch conversion circuit (12) that subjects one output emitted from the distribution circuit to frequency modulation and outputs a frequency-modulated signal, an FM demodulation circuit (92) that subjects an output emitted from the FM batch conversion circuit to frequency demodulation and outputs a frequency-demodulated signal, an amplitude/delay adjustment circuit (38, 39) that subjects the other output emitted from the distribution circuit to amplitude adjustment and delay adjustment and outputs an amplitude-delay-adjusted signal, and a combining circuit that combines an output emitted from the FM demodulation circuit and an output emitted from the amplitude-delay adjustment circuit and outputs a combined signal.

FIG.4

**Description**

Technical Field

The present invention relates to a distortion generator circuit used for optical signal transmission of wide-band signals, a pre-distortion circuit, an optical signal transmitter using this pre-distortion circuit, and an optical signal transmission system using this optical signal transmitter. More particularly, the present invention relates to a distortion generator circuit used for optical signal transmission of multi-channel video signals each of which is amplitude-modulated (AM) or quadrature-amplitude-modulated (QAM) and that are frequency-division-multiplexed, a pre-distortion circuit, an optical signal transmitter using this pre-distortion circuit, and an optical signal transmission system using this optical signal transmitter.

Background Art

Conventionally, an optical signal transmitter and an optical signal transmission system employing FM batch conversion method that subjects video signals, which have undergone frequency-division multiplexing, to frequency modulation as a single unit are known as an optical signal transmitter and an optical signal transmission system used for optical signal transmission of multi-channel video signals that have undergone frequency-division multiplexing and that have undergone amplitude modulation or quadrature amplitude modulation.

An optical signal transmitter and an optical signal transmission system that employ this FM batch conversion method are disclosed in international standard ITU-T J.185, "Transmission equipment for transferring multi-channel television signals over optical access networks by FM conversion (see Non-patent Document 1).

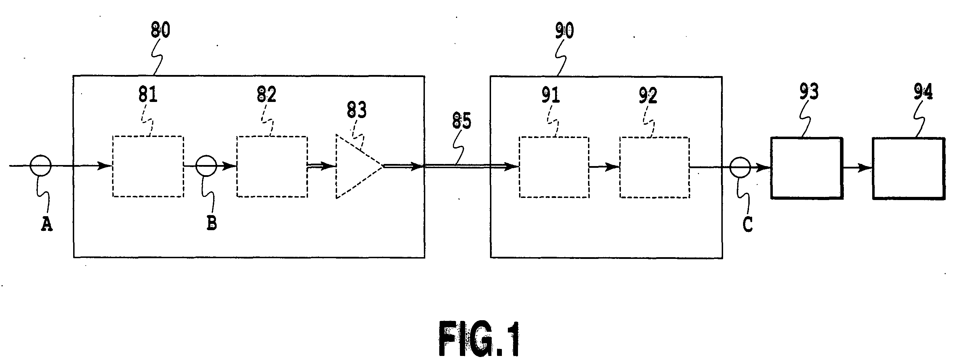

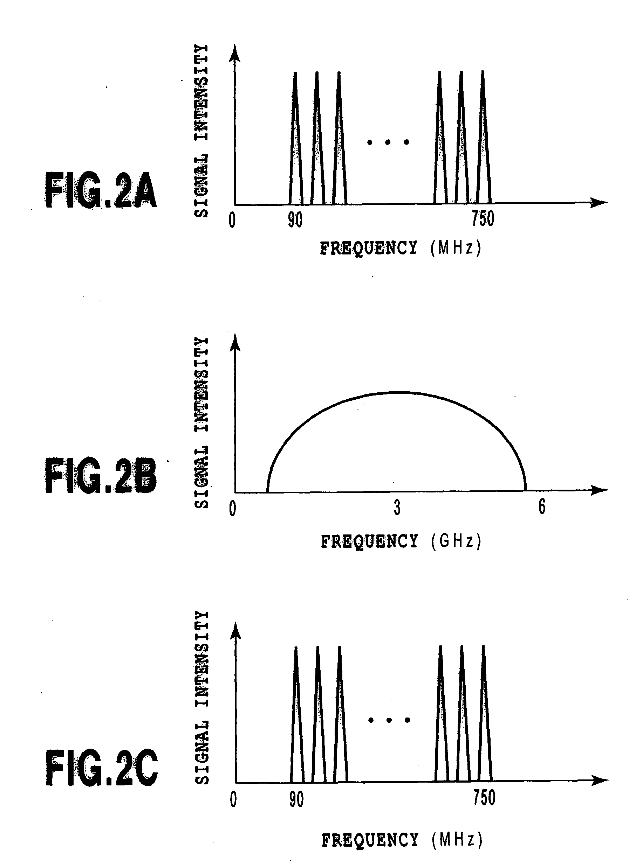

Fig. 1 shows a configuration of a conventional optical signal transmitter and a conventional optical signal transmission system that employ the FM batch conversionmethod. Fig. 2A, Fig. 2B, and Fig. 2C show signal forms at position "A," "B," and "C" of Fig. 1, respectively. The optical signal transmission systemof Fig. 1 is equipped with an optical signal transmitter 80 including an FM batch conversion circuit 81, a light source 82, and an optical amplifier circuit 83, an optical signal transmission path 85, an optical signal receiver 90 including a photoelectric conversion circuit 91 and an FM demodulation circuit 92, a set-top box 93, and a television receiver 94. Signal spectra at position "A," "B," and "C" of Fig. 1 are shown in Fig. 2A, Fig. 2B, and Fig. 2C, respectively. The same applies to position "A," "B," and "C" of each figure shown below.

In the optical signal transmitter 80 of Fig. 1, frequency-multiplexed video signals shown in Fig. 2A are converted into one wide-band frequency-modulated signal shown in Fig. 2B by the FM batch conversion circuit 81. The frequency-modulated signal is subjected to intensity modulation by the light source 82, and is further subjected to optical amplification by the optical amplifier circuit 83, and is transmitted to the optical signal transmission path 85. In the optical signal receiver 90, the frequency-modulated signal that has undergone intensity modulation is photoelectrically converted by the photoelectric conversion circuit 91, and is returned to an electric signal. This electric signal, which is a wide-band frequency-modulated signal, is subjected to frequency demodulation by the FM demodulation circuit 92, and the frequency-multiplexed video signals are demodulated as shown in Fig. 2C. The demodulated video signals pass through the set-top box 93, and reach the television receiver 94, whereby a desired video channel is selected.

A method in which optical heterodyne detection is used and a method in which a voltage-controlled oscillator ("VCO") is used have been proposed as a method for realizing an FM batch conversion circuit applicable to the FM batch conversion method (see Patent Document 1, Non-patent Document 2, and Non-patent Document 3, for example). These methods have an advantage in the fact that the minimum light-receiving electric power can be made smaller than a conventional sub-carriermultiplex (SCM) method according to which an AM video signal and a 64QAM video signal are subjected to frequency multiplication and are optically transmitted in a direct manner.

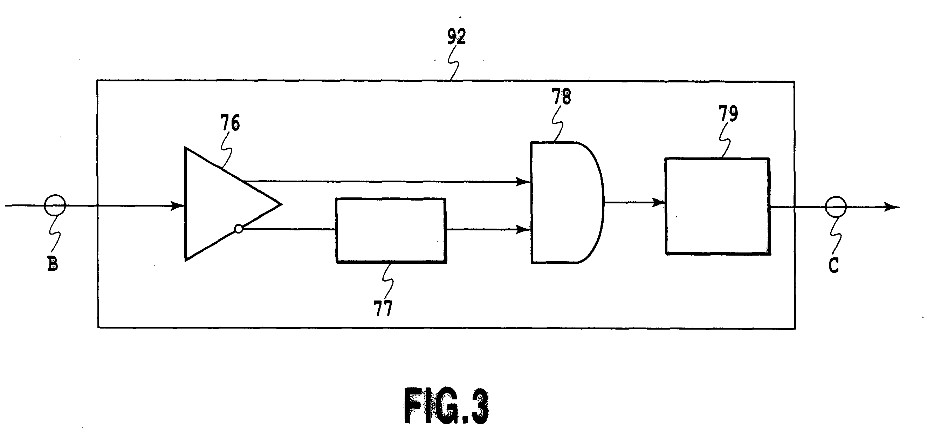

Fig. 3 shows the configuration of an FM demodulation circuit applicable to the optical signal receiver 90. The FM demodulation circuit 92 shown in Fig. 3 is an FM demodulation circuit by delay-line detection, and includes a limiter amplifier 76, a delay line 77, an AND gate 78, and a low-pass filter 79.

In the FM demodulation circuit 92, a frequency-modulated optical signal that has been input is shaped into a rectangular wave by the limiter amplifier 76. The output of the limiter amplifier 76 is branched into two output parts, one of which is input to an input terminal of the AND gate 78 and the other of which undergoes a polarity reversal, is then delayed by time $\tau$ by means of the delay line 77, and is input to an input terminal of the AND gate 78. The output of the AND gate 78 is smoothed by the low-pass filter 79, and is turned into frequency-demodulated output (see Non-patent Document 2, for example).

A double-tuned frequency discriminator having a resonance circuit, a Foster-Seeley frequency discriminator, and a ratio detection type FM demodulator can be mentioned as a circuit form of the FM demodulation circuit, in addition to the FM demodulation circuit by delay-line detection described here.

A low distortion is required in the optical signal transmitter and the optical signal transmission system using the FM batch conversion method. For example, in the optical signal transmitter and the optical signal transmission system using the FM batch conversion method described in Non-patent Document 2, a CNR (Carrier-to-Noise Ratio) is set to be 42 dB or more, and a CSO (Composite Second-Order Distortion) and a CTB (Composite Triple Beat) are set to be -54 dB or less.

Conventionally, a pre-distortion circuit is known as a technique for reducing a distortion (see Patent Document 2, for example). Patent Document 2 discloses a configuration in which a pre-distortion circuit is applied to the distortion compensation of an FM batch conversion circuit. According to this configuration, the pre-distortion circuit is formed by using a distortion generator circuit by an element having nonlinearity, such as a diode, a FET, or a transistor, so as to compensate for the distortion of the FM batch conversion circuit.

However, even if the pre-distortion circuit is formed by using a distortion generator circuit by an element having nonlinearity, such as a diode, so as to compensate for the distortion of the FM batch conversion circuit, since the signal frequency of a frequency-multiplexed AM video signal or QAM video signal to be input is that of a wide-band ranging from, for example, 93 MHz to 747 MHz, it was difficult to compensate for all distortions of the FM batch conversion circuit over this wide-band.

Patent Document 1: Japanese Patent No. 2700622;

Patent Document 2: Japanese Patent No. 3371355;

Non-patent Document 1: international standard, ITU-TJ. 185, "Transmission equipment for transferring multi-channel television signals over optical access networks by FM conversion," ITU-T;

Non-patent Document 2: Shibata et al. "Optical image distribution system using an FM batch conversion method, Institute of Electronics, Information and Communication Engineers, Technical Journal B, Vol. J83-B, No. 7, July, 2000, pp. 948-959;

Non-patent Document 3: Suzuki et al. "Pulsed FM batch conversion modulation analog optical CATV distribution method" Institute of Electronics, Information and Communication Engineers, Autumn Conference, B-603, 1991.

Disclosure of Invention

It is an obj ect of the present invention to provide a distortion generator circuit that generates a distortion substantially equal to that of an FM batch conversion circuit even when input electric signals in a wide frequency range are subjected to frequency modulation by the FM batch conversion circuit. It is another object of the present invention to provide a pre-distortion circuit that compensates for the distortion of the FM batch conversion circuit by using the distortion generator circuit. It is still another object of the present invention to provide an optical signal transmitter having less distortion by using the pre-distortion circuit. It is still another object of the present invention to provide an optical signal transmission system that can transmit wide-band signals, such as video signals, having less distortion by using the optical signal transmitter.

In order to achieve these objects, the distortion generator circuit of the present invention is a distortion generator circuit that generates a distortion substantially equal to a distortion of an FM batch conversion circuit, and the distortion generator circuit comprises a distribution circuit that distributes an input electric signal into two electric signals, an FM batch conversion circuit that subjects one output emitted from the distribution circuit to frequency modulation and outputs a frequency-modulated signal, an FM demodulation circuit that subj ects an output emitted from the FM batch conversion circuit to frequency demodulation and outputs a frequency-demodulated signal, an amplitude-delay adjustment circuit that subjects the other output emitted from the distribution circuit to amplitude adjustment and delay adjustment and outputs an amplitude-delay-adjusted signal, and a combining circuit that combines an output emitted from the FM demodulation circuit and an output emitted from the amplitude-delay adjustment circuit and outputs a combined signal.

Further, the distortion generator circuit of the present invention is wherein the distribution circuit is a differential distribution circuit that distributes an input electric signal into two electric signals having mutually opposite phases, and the combining circuit is an in-phase combining circuit that subjects the output emitted from the FM demodulation circuit and the output emitted from the amplitude-delay adjustment circuit to in-phase combining and outputs a combined signal, or wherein the distribution circuit is an in-phase distribution circuit that distributes an input electric signal into two electric signals, and the combining circuit is a differential combining circuit that subjects the output emitted from the FM demodulation circuit and the output emitted from the amplitude-delay adjustment circuit to differential combining and outputs a combined signal.

The distortion generator circuit of the present invention can additionally include a light source that outputs an optical signal obtained by subjecting the output emitted from the FM batch conversion circuit to intensity modulation and a photoelectric conversion circuit that converts an output of the optical signal emitted from the light source into an electric signal and outputs this electric signal.

Further, the distortion generator circuit of the present invention is wherein the amplitude-delay adjustment circuit includes an amplitude control terminal that makes amplitude adjustment by control from outside and a delay control terminal that makes delay adjustment by control from outside.

The pre-distortion circuit of the present invention comprises a distributor that distributes an input electric signal into two electric signals, a delay line that delays one output emitted from the distributor and outputs a delayed signal, the distortion generator circuit mentioned above, a second amplitude-delay adjustment circuit that subjects an output emitted from the distortion generator circuit to amplitude adjustment and delay adjustment and outputs an adjusted signal, and a combiner that combines an output emitted from the delay line and an output emitted from the second amplitude-delay adjustment circuit and outputs a combined signal, in which an in-phase relationship is established between a phase of an electric signal of an output of the pre-distortion circuit and a phase of an electric signal of an input of the pre-distortion circuit.

The pre-distortion circuit of the present invention may include a differential distributor or an in-phase distributor used as the distributor and a differential combiner or an in-phase combiner used as the combiner.

Further, the optical signal transmitter of the present invention includes the distortion generator circuit of the present invention or the pre-distortion circuit of the present invention.

Further, the optical signal transmitting system of the present invention includes the distortion generator circuit of the present invention.

The distortion generator circuit of the present invention can generate a distortion substantially equal to a distortion of the FM batch conversion circuit even when input electric signals in a wide frequency range are subjected to frequencymodulation by the FM batch conversion circuit. Additionally, the pre-distortion circuit of the present invention can output an opposite distortion that compensates for the distortion of the FM batch conversion circuit by using the distortion generator circuit. Additionally, the optical signal transmitter of the present invention can transmit an optical signal having less distortion by using the pre-distortion circuit. Additionally, the optical signal transmission system of the present invention can transmit a wide-band signal, such as a video signal, having less distortion by using the optical signal transmitter.

Brief Description of Drawings

Fig. 1 is a block diagram showing a configuration of a conventional optical signal transmitter and a conventional optical signal transmission system using an FM batch conversion method;
Fig. 2A is a view showing a signal spectrum in the optical signal transmitter and the optical signal transmission system;
Fig. 2B is a view showing a signal spectrum in the optical signal transmitter and the optical signal transmission system;
Fig. 2C is a view showing a signal spectrum in the optical signal transmitter and the optical signal transmission system;
Fig. 3 is a block diagram showing a configuration of an FM demodulation circuit applicable to an optical signal receiver;
Fig. 4 is a block diagram showing a configuration of a distortion generator circuit applicable to a pre-distortion circuit and an optical signal transmitter;
Fig. 5 is a block diagram showing a configuration of a distortion generator circuit applicable to a pre-distortion circuit and an optical signal transmitter;
Fig. 6 is a block diagram showing a configuration of a distortion generator circuit applicable to a pre-distortion circuit and an optical signal transmitter;
Fig. 7 is a block diagram showing a configuration of a distortion generator circuit applicable to a pre-distortion circuit and an optical signal transmitter;
Fig. 8 is a block diagram showing a configuration of an FMbatch conversion circuit that is applied to a distortion generator circuit and that uses an optical frequency modulation portion;
Fig. 9 is a block diagram showing a configuration of an FMbatch conversion circuit that is applied to a distortion generator circuit and that uses two optical frequency modulation portions for a push-pull configuration;
Fig. 10 is a block diagram showing a configuration of an FM batch conversion circuit that is applied to a distortion generator circuit and that uses a voltage-controlled oscillator;
Fig. 11 is a block diagram showing a configuration of an FM batch conversion circuit that is applied to a distortion generator circuit and that uses two voltage-controlled oscillators for a push-pull configuration;
Fig. 12 is a block diagram showing a configuration of a pre-distortion circuit using a distortion generator circuit;
Fig. 13 is a block diagram showing a configuration of a pre-distortion circuit using a distortion generator circuit;
Fig. 14 is a block diagram showing a configuration of a pre-distortion circuit using a distortion generator circuit;
Fig. 15 is a block diagram showing a configuration of a pre-distortion circuit using a distortion generator circuit;
Fig. 16 is a block diagram showing a configuration of an optical signal transmitter using a pre-distortion circuit;
Fig. 17 is a block diagram showing a configuration of an optical signal transmitter using a distortion generator circuit;
Fig. 18 is a block diagram showing a configuration of an optical signal transmitter using a distortion generator circuit;
Fig. 19 is a block diagram showing a configuration of an optical signal transmission system provided with an optical signal transmitter and an optical signal receiver including a distortion generator circuit and a pre-distortion circuit;
Fig. 20 is a block diagram showing a configuration of a distortion generator circuit applicable to a pre-distortion circuit and an optical signal transmitter;
Fig. 21 is a block diagram showing a configuration of a distortion generator circuit applicable to a pre-distortion circuit and an optical signal transmitter;
Fig. 22 is a block diagram showing a configuration of a distortion generator circuit applicable to a pre-distortion circuit and an optical signal transmitter; and
Fig. 23 is a block diagram showing a configuration of a distortion generator circuit applicable to a pre-distortion circuit and an optical signal transmitter.

Best Mode for Carrying Out the Invention

Embodiments of the present invention will be hereinafter described with reference to the accompanying drawings. In the drawings, the same reference symbol is given to the same element.

(First Embodiment)

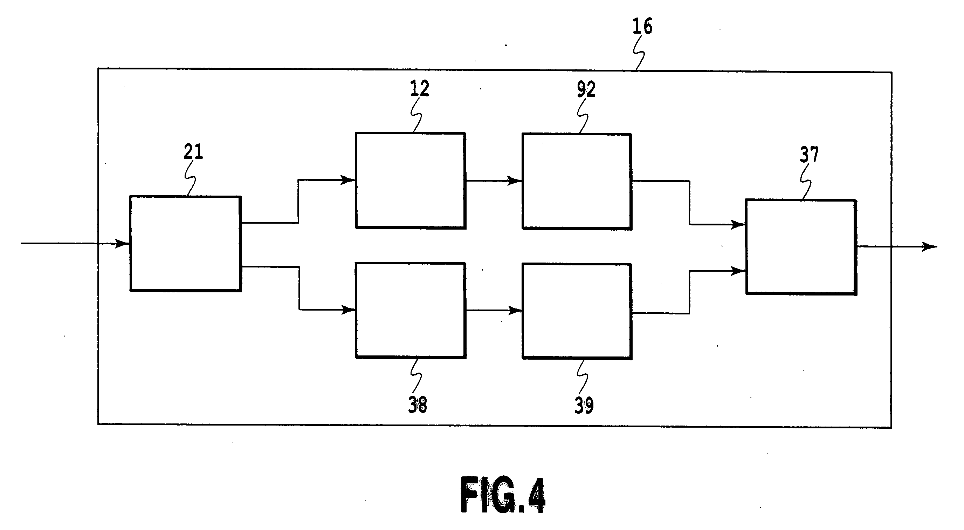

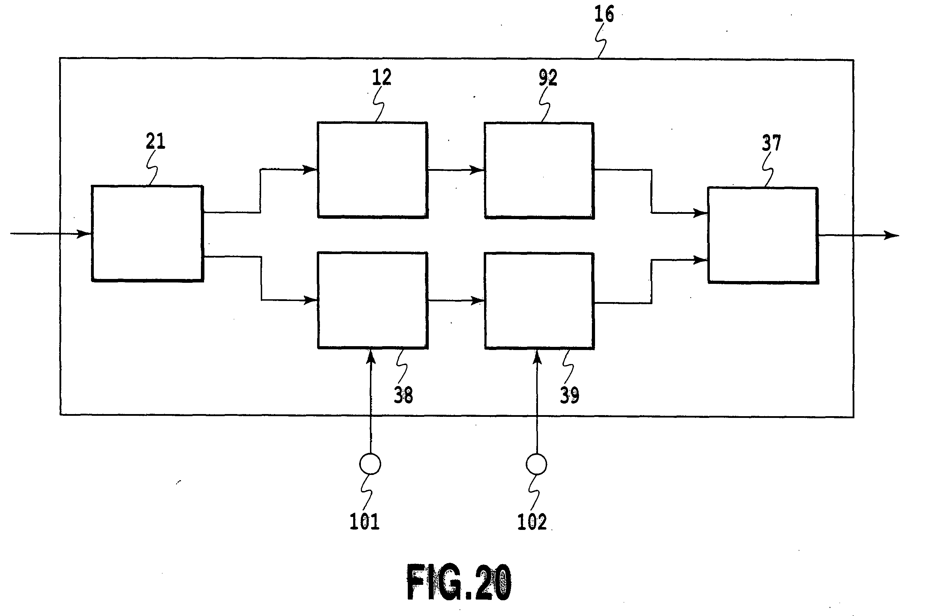

This is an embodiment of a distortion generator circuit. Fig. 4 and Fig. 20 show configurations of a distortion generator circuit according to this embodiment. The distortion generator circuit 16 of Fig. 4 includes an FM batch conversion circuit 12, a differential distribution circuit 21, an in-phase combining circuit 37, an amplitude adjustment circuit 38, a delay adjustment circuit 39, and an FM demodulation circuit 92. The distortion generator circuit 16 of Fig. 20 further includes an amplitude control terminal 101 that adjusts the amplitude amount of the output of the amplitude adjustment circuit 38 and a delay control terminal 102 that adjusts the delay amount of the output of the delay adjustment circuit 39.

In Fig. 4 and Fig. 20, an electric signal input to the differential distribution circuit 21 is distributed into two electric signals, i.e., a 0-phase electric signal and a $\pi$-phase electric signal that have mutually opposite phases. One of the distributed electric signals is input to the FM batch conversion circuit 12, and the other electric signal is input to the amplitude adjustment circuit 38. The FM batch conversion circuit 12 subjects one output from the differential distribution circuit 21 to frequency modulation, and outputs this to the FM demodulation circuit 92. The FM demodulation circuit 92 subjects the frequency-modulated electric signal to frequency demodulation, and outputs this to the in-phase combining circuit 37. The amplitude adjustment circuit 38 and the delay adjustment circuit 39 subject the other output from the differential distribution circuit 21 to amplitude adjustment and delay adjustment so that, in the in-phase combining circuit 37, the electric signals from the FM demodulation circuit 92 and from the delay adjustment circuit 39 coincide with each other in amplitude and delay. The adjusted signal is output therefrom to the in-phase combining circuit 37. The in-phase combining circuit 37 subjects the output from the FM demodulation circuit 92 and the output from the delay adjustment circuit 39 to in-phase combining, and outputs the combined signal.

In the in-phase synthesis circuit 37, the two input electric signals are subjected to phase inversion in the differential distribution circuit 21 so as to have mutually opposite phases, and are combined by the same amplitude amount and the same delay amount, and hence are offset by each other. However, if both of or either of the FM batch conversion circuit 12 and the FM demodulation circuit 92 has a distortion, the in-phase combining circuit 37 outputs this distortion.

Let the phases of outputs of the differential distribution circuit 21 by which an input electric signal is distributed into two electric signals having mutually opposite phases be 0 phase and $\pi$ phase. If the output to the FM batch conversion circuit 12 is 0 phase, and the output to the amplitude adjustment circuit 38 is $\pi$ phase, the distortion generator circuit 16 outputs the same distortion in phase as the distortion generated by the FM batch conversion circuit 12 and the FM demodulation circuit 92. If the output to the FM batch conversion circuit 12 is $\pi$ phase, and the output to the amplitude adjustment circuit 38 is 0 phase, the distortion generator circuit 16 outputs the anti-phase distortion opposite to the distortion generated by the FM batch conversion circuit 12 and the FM demodulation circuit 92.

In the distortion generator circuit 16 of Fig. 20, the amplitude adjustment circuit 38 is provided with the amplitude control terminal 101 that adjusts the amplitude amount of output, and the delay adjustment circuit 39 is provided with the delay control terminal 102 that adjusts the delay amount of output. Therefore, the amplitude amount and the delay amount can be adjusted by input from the outside.

Preferably, the FM batch conversion circuit 12 and the FM demodulation circuit 92 used in Fig. 4 and Fig. 20 have the same or almost the same distortion characteristic as an FM batch conversion circuit and an FM demodulation circuit of an optical signal transmitter and an optical signal receiver to which the distortion generator circuit 16 is applied.

Since both of the amplitude adjustment circuit 38 and the delay adjustment circuit 39 are linear circuits, the arrangement order of these circuits may be reversed. Additionally, since the amplitude adjustment circuit 38 and the delay adjustment circuit 39 adjust the amplitude and the delay of the input to the in-phase combining circuit 37, these circuits 38 and 39 may be disposed on the side of the FM batch conversion circuit 12.

Therefore, the distortion generator circuit 16 according to this embodiment can output the same distortion as the distortion generated by each of the FM batch conversion circuit and the FM demodulation circuit of the optical signal transmitter and the optical signal receiver to which the distortion generator circuit 16 is applied.

(Second Embodiment)

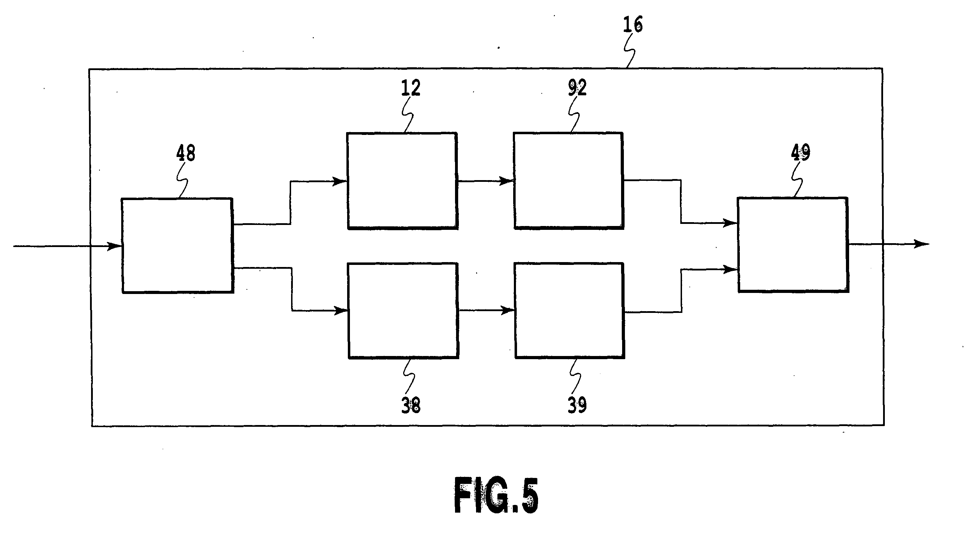

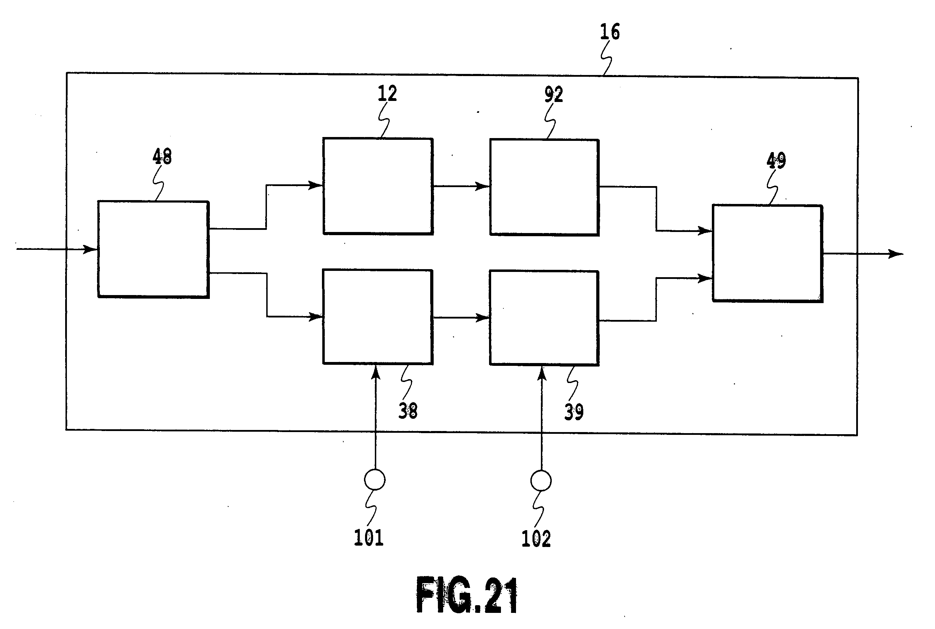

This is another embodiment of the distortion generator circuit. Fig. 5 and Fig. 21 show configurations of the distortion generator circuit according to this embodiment. The distortion generator circuit 16 of Fig. 5 includes an FM batch conversion circuit 12, an amplitude adjustment circuit 38, a delay adjustment circuit 39, an in-phase distribution circuit 48, a differential combining circuit 49, and an FM demodulation circuit 92. The distortion generator circuit 16 of Fig. 21 further includes an amplitude control terminal 101 that adjusts the amplitude amount of the output of the amplitude adjustment circuit 38 and a delay control terminal 102 that adjusts the delay amount of the output of the delay adjustment circuit 39.

In Fig. 5 and Fig. 21, an electric signal input to the in-phase distribution circuit 48 is distributed into two electric signals having the same phase. One of the distributed electric signals is input to the FM batch conversion circuit 12, and the other electric signal is input to the amplitude adjustment circuit 38. The FM batch conversion circuit 12 subjects one output from the in-phase distribution circuit 48 to frequency modulation, and outputs this to the FM demodulation circuit 92. The FM demodulation circuit 92 subjects the frequency-modulated electric signal to frequency demodulation, and outputs this to the differential combining circuit 49. The amplitude adjustment circuit 38 and the delay adjustment circuit 39 subject the other output from the in-phase distribution circuit 48 to amplitude adjustment and delay adjustment so that, in the differential combining circuit 49, the electric signals from the FM demodulation circuit 92 and from the delay adjustment circuit 39 coincide with each other in amplitude and delay. The adjusted signal is output therefrom to the differential combining circuit 49. The differential combining circuit 49 subjects the output from the FM demodulation circuit 92 and the output from the delay adjustment circuit 39 to differential combining, and outputs the combined signal.

In the differential combining circuit 49, the two input electric signals are offset by each other, because the two electric signals distributed by the in-phase distribution circuit 48 are combined by the same amplitude amount, by the same delay amount, and in the state of mutually opposite phases. However, if both of or either of the FM batch conversion circuit 12 and the FM demodulation circuit 92 has a distortion, the differential combining circuit 49 outputs this distortion.

Let the phases of the input of the differential combining circuit 49, which subjects the output from the FM demodulation circuit 92 and the output from the delay adjustment circuit 39 to differential combining and outputs the combined signal, be 0 phase and π phase. If the output from the FM demodulation circuit 92 is 0 phase, and the output from the delay adjustment circuit 39 is π phase, and these outputs are subjected to differential combining, the distortion generator circuit 16 outputs the same distortion in phase as the distortion generated by the FM batch conversion circuit 12 and the FM demodulation circuit 92. If the output from the FM demodulation circuit 92 is π phase, and the output from the delay adjustment circuit 39 is 0 phase, and these outputs are subjected to differential combining, the distortion generator circuit 16 outputs the anti-phase distortion opposite to the distortion generated by the FM batch conversion circuit 12 and the FM demodulation circuit 92.

In the distortion generator circuit 16 of Fig. 21, the amplitude adjustment circuit 38 is provided with the amplitude control terminal 101 that adjusts the amplitude amount of output, and the delay adjustment circuit 39 is provided with the delay control terminal 102 that adjusts the delay amount of output. Therefore, the amplitude amount and the delay amount can be adjusted by input from the outside.

Preferably, the FM batch conversion circuit 12 and the FM demodulation circuit 92 used in Fig. 5 and Fig. 21 have the same or almost the same distortion characteristic as an FM batch conversion circuit and an FM demodulation circuit of an optical signal transmitter and an optical signal receiver to which the distortion generator circuit 16 is applied.

Since both of the amplitude adjustment circuit 38 and the delay adjustment circuit 39 are linear circuits, the arrangement order of these circuits may be reversed. Additionally, since the amplitude adjustment circuit 38 and the delay adjustment circuit 39 adjust the amplitude and the delay of the input to the differential combining circuit 49, these circuits 38 and 39 may be disposed on the side of the FM batch conversion circuit 12.

Therefore, the distortion generator circuit 16 according to this embodiment can output the same distortion as the distortion generated by each of the FM batch conversion circuit and the FM demodulation circuit of the optical signal transmitter and the optical signal receiver to which the distortion generator circuit 16 is applied.

(Third Embodiment)

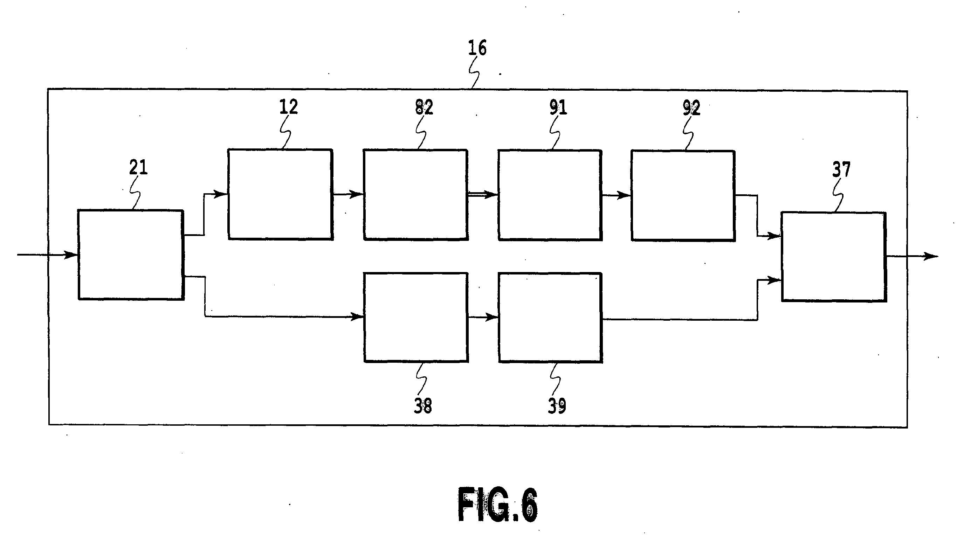

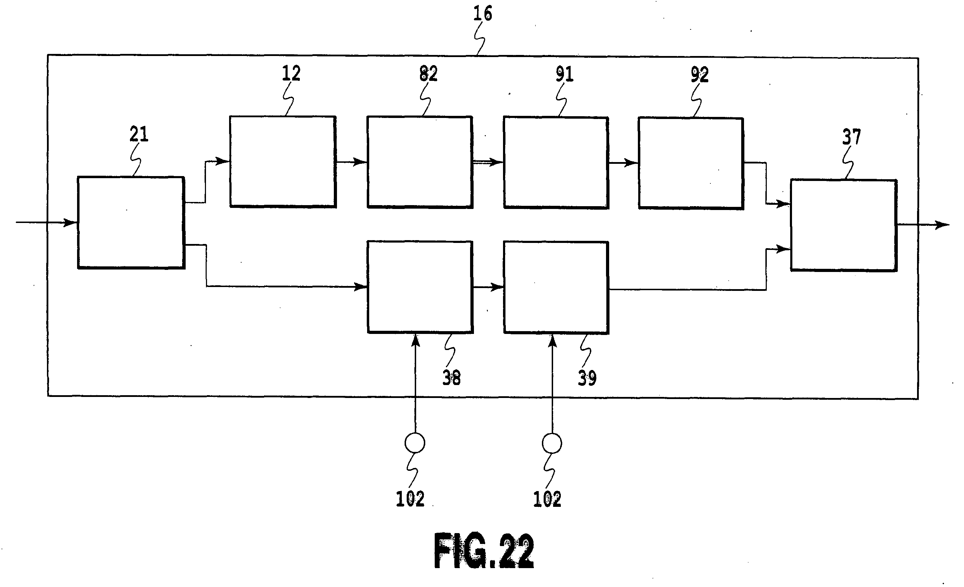

This is still another embodiment of the distortion generator circuit. Fig. 6 and Fig. 22 show configurations of the distortion generator circuit according to this embodiment. The distortion generator circuit 16 of Fig. 6 includes an FM batch conversion circuit 12, a differential distribution circuit 21, an in-phase combining circuit 37, an amplitude adjustment circuit 38, a delay adjustment circuit 39, a light source 82, a photoelectric conversion circuit 91, and an FM demodulation circuit 92. The distortion generator circuit 16 of Fig. 22 further includes an amplitude control terminal 101 that adjusts the amplitude amount of the output of the amplitude adjustment circuit 38 and a delay control terminal 102 that adjusts the delay amount of the output of the delay adjustment circuit 39.

This embodiment differs from the first embodiment in the fact that the light source 82 and the photoelectric conversion circuit 91 are added, and a conversion into an optical signal and an inverse conversion are performed between the frequency modulation and the frequency demodulation. In more detail, in Fig. 6 and Fig. 22, an electric signal input to the differential distribution circuit 21 is distributed into two electric signals, i.e., a 0-phase electric signal and a $\pi$-phase electric signal that have mutually opposite phases. One of the distributed electric signals is input to the FM batch conversion circuit 12, and the other electric signal is input to the amplitude adjustment circuit 38. The FM batch conversion circuit 12 subjects one output from the differential distribution circuit 21 to frequency modulation, and outputs this to the light source 82. The light source 82 converts the frequency-modulated electric signal into an optical signal, and outputs this to the photoelectric conversion circuit 91. The photoelectric conversion circuit 91 converts the optical signal into an electric signal, and outputs this to the FM demodulation circuit 92. The FM demodulation circuit 92 subjects the frequency-modulated electric signal to frequency demodulation, and outputs this to the in-phase combining circuit 37. The amplitude adjustment circuit 38 and the delay adjustment circuit 39 subject the other output from the differential distribution circuit 21 to amplitude adjustment and delay adjustment so that, in the in-phase combining circuit 37, the electric signals from the FM demodulation circuit 92 and from the delay adjustment circuit 39 coincide with each other in amplitude and delay. The adjusted signal is output therefrom to the in-phase combining circuit 37. The in-phase combining circuit 37 subjects the output from the FM demodulation circuit 92 and the output from the delay adjustment circuit 39 to in-phase combining, and outputs the combined signal.

In the in-phase combining circuit 37, the two input electric signals are subjected to phase inversion by the differential distribution circuit 21 so as to have mutually opposite phases, and are combined by the same amplitude amount and the same delay amount, and hence are offset by each other. However, if all of or any one of the FM batch conversion circuit 12, the light source 82, the photoelectric conversion circuit 91, and the FM demodulation circuit 92 has a distortion, the in-phase combining circuit 37 outputs this distortion.

Let the phases of outputs of the differential distribution circuit 21 by which an input electric signal is distributed into two electric signals having mutually opposite phases be 0 phase and $\pi$ phase. If the output to the FM batch conversion circuit 12 is 0 phase, and the output to the amplitude adjustment circuit 38 is $\pi$ phase, the distortion generator circuit 16 outputs the same distortion in phase as the distortion generated by the FM batch conversion circuit 12, the light source 82, the photoelectric conversion circuit 91, and FM demodulation circuit 92. If the output to the FM batch conversion circuit 12 is $\pi$ phase, and the output to the amplitude adjustment circuit 38 is 0 phase, the distortion generator circuit 16 outputs the anti-phase distortion opposite to the distortion generated by the FM batch conversion circuit 12, the light source 82, the photoelectric conversion circuit 91, and the FM demodulation circuit 92.

In the distortion generator circuit 16 of Fig. 22, the amplitude adjustment circuit 38 is provided with the amplitude control terminal 101 that adjusts the amplitude amount of output, and the delay adjustment circuit 39 is provided with the delay control terminal 102 that adjusts the delay amount of output. Therefore, the amplitude amount and the delay amount can be adjusted by input from the outside.

Preferably, the FM batch conversion circuit 12, the light source 82, the photoelectric conversion circuit 91, and the FM demodulation circuit 92 used in Fig. 6 and Fig. 22 have the same or almost the same distortion characteristic as an FM batch conversion circuit, a light source serving as a transmission circuit, a photoelectric conversion circuit, and an FM demodulation circuit of an optical signal transmitter and an optical signal receiver to which the distortion generator circuit 16 is applied.

Since both of the amplitude adjustment circuit 38 and the delay adjustment circuit 39 are linear circuits, the arrangement order of these circuits may be reversed. Additionally, since the amplitude adjustment circuit 38 and the delay adjustment circuit 39 adjust the amplitude and the delay of the input to the in-phase combining circuit 37, these circuits 38 and 39 may be disposed on the side of the FM batch conversion circuit 12.

Therefore, the distortion generator circuit 16 according to this embodiment can output the same distortion as the distortion generated by each of the FM batch conversion circuit, the light source, the photoelectric conversion circuit, and the FM demodulation circuit of the optical signal transmitter and the optical signal receiver to which the distortion generator circuit 16 is applied.

(Fourth Embodiment)

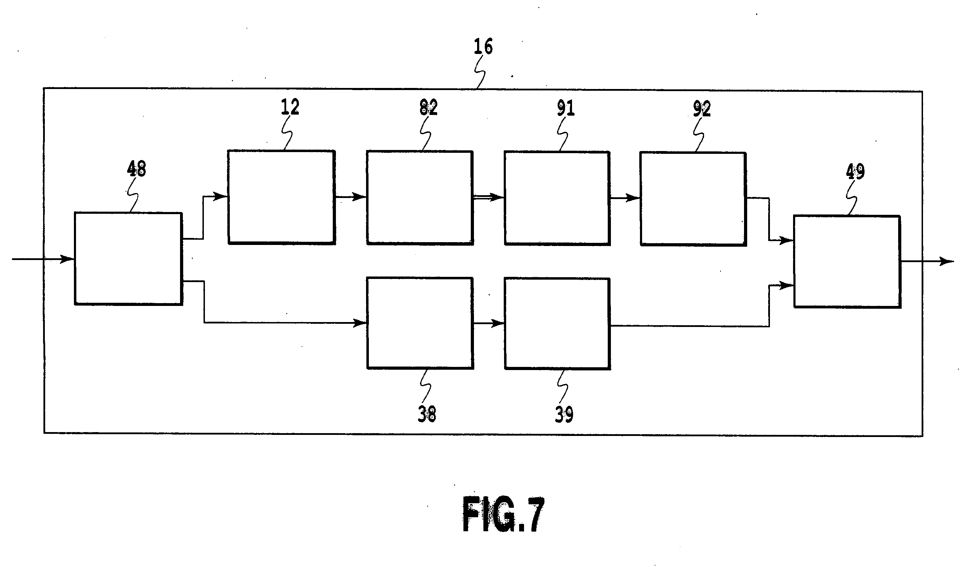

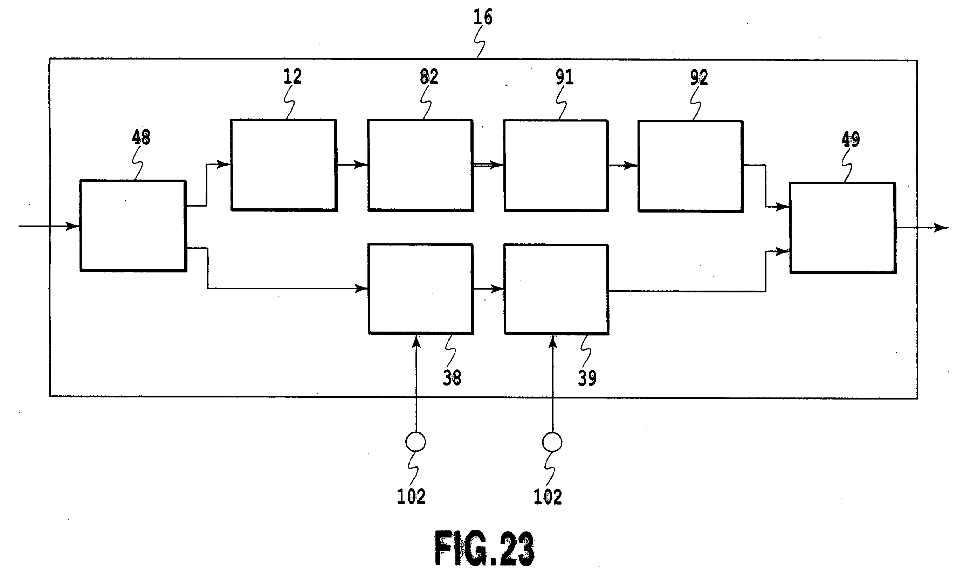

This is still another embodiment of the distortion generator circuit. Fig. 7 and Fig. 23 show configurations of the distortion generator circuit according to this embodiment. The distortion generator circuit 16 of Fig. 7 includes an FM batch conversion circuit 12, an amplitude adjustment circuit 38, a delay adjustment circuit 39, an in-phase distribution circuit 48, a differential combining circuit 49, a light source 82, a photoelectric conversion circuit 91, and an FM demodulation circuit 92. The distortion generator circuit 16 of Fig. 23 further includes an amplitude control terminal 101 that adjusts the amplitude amount of the output of the amplitude adjustment circuit 38 and a delay control terminal 102 that adjusts the delay amount of the output of the delay adjustment circuit 39.

This embodiment differs from the second embodiment in the fact that the light source 82 and the photoelectric conversion circuit 91 are added, and a conversion into an optical signal and an inverse conversion are performed between the frequency modulation and the frequency demodulation. In more detail, in Fig. 7 and Fig. 23, an electric signal input to the in-phase distribution circuit 48 is distributed into two electric signals having the same phase.

One of the distributed electric signals is input to the FM batch conversion circuit 12, and the other electric signal is input to the amplitude adjustment circuit 38. The FM batch conversion circuit 12 subjects one output from the in-phase distribution circuit 48 to frequency modulation, and outputs this to the light source 82. The light source 82 converts the frequency-modulated electric signal into an optical signal, and outputs this to the photoelectric conversion circuit 91. The photoelectric conversion circuit 91 converts the optical signal into an electric signal, and outputs this to the FM demodulation circuit 92. The FM demodulation circuit 92 subjects the frequency-modulated electric signal to frequency demodulation, and outputs this to the differential combining circuit 49. The amplitude adjustment circuit 38 and the delay adjustment circuit 39 subject the other output from the in-phase distribution circuit 48 to amplitude adjustment and delay adjustment so that, in the differential combining circuit 49, the electric signals from the FM demodulation circuit 92 and from the delay adjustment circuit 39 coincide with each other in amplitude and delay. The adjusted signal is output therefrom to the differential combining circuit 49. The differential combining circuit 49 subjects the output from the FM demodulation circuit 92 and the output from the delay adjustment circuit 39 to differential combining, and outputs the combined signal.

In the differential combining circuit 49, the two input electric signals are offset by each other, because the two electric signals distributed by the in-phase distribution circuit 48 are combined by the same amplitude amount, by the same delay amount, and in the state of mutually opposite phases. However, if all of or any one of the FM batch conversion circuit 12, the light source 82, the photoelectric conversion circuit 91, and the FM demodulation circuit 92 has a distortion, the differential combining circuit 49 outputs this distortion.

Let the phases of the input of the differential combining circuit 49, which subjects the output from the FM demodulation circuit 92 and the output from the delay adjustment circuit 39 to differential combining and outputs the combined signal, be 0 phase and $\pi$ phase. If the output from the FM demodulation circuit 92 is 0 phase, and the output from the delay adjustment circuit 39 is $\pi$ phase, and these outputs are subjected to differential combining, the distortion generator circuit 16 outputs the same distortion in phase as the distortion generated by each of the FM batch conversion circuit 12, the light source 82, the photoelectric conversion circuit 91, and the FM demodulation circuit 92. If the output from the FM demodulation circuit 92 is $\pi$ phase, and the output from the delay adjustment circuit 39 is 0 phase, and these outputs are subjected to differential combining, the distortion generator circuit 16 outputs the anti-phase distortion opposite to the distortion generated by each of the FM batch conversion circuit 12, the light source 82, the photoelectric conversion circuit 91, and the FM demodulation circuit 92.

In the distortion generator circuit 16 of Fig. 23, the amplitude adjustment circuit 38 is provided with the amplitude control terminal 101 that adjusts the amplitude amount of output, and the delay adjustment circuit 39 is provided with the delay control terminal 102 that adjusts the delay amount of output. Therefore, the amplitude amount and the delay amount can be adjusted by input from the outside.

Preferably, the FM batch conversion circuit 12, the light source 82, the photoelectric conversion circuit 91, and the FM demodulation circuit 92 used in Fig. 7 and Fig. 23 have the same or almost the same distortion characteristic as an FM batch conversion circuit, a light source serving as a transmission circuit, a photoelectric conversion circuit, and an FM demodulation circuit of an optical signal transmitter and an optical signal receiver to which the distortion generator circuit 16 is applied.

Since both of the amplitude adjustment circuit 38 and the delay adjustment circuit 39 are linear circuits, the arrangement order of these circuits may be reversed. Additionally, since the amplitude adjustment circuit 38 and the delay adjustment circuit 39 adjust the amplitude and the delay of the input to the differential combining circuit 49, these circuits 38 and 39 may be disposed on the side of the FM batch conversion circuit 12.

Therefore, the distortion generator circuit 16 according to this embodiment can output the same distortion as the distortion generated by each of the FM batch conversion circuit, the light source serving as a transmission circuit, the photoelectric conversion circuit, and the FM demodulation circuit of the optical signal transmitter and the optical signal receiver to which the distortion generator circuit 16 is applied.

(Fifth Embodiment)

This is an embodiment of an FM batch conversion circuit that can be used in the distortion generator circuit mentioned in each of the first to fourth embodiments, i.e., an FM batch conversion circuit 12 that can be used in the distortion generator circuit 16 shown in each of Fig. 4 to Fig. 7 and Fig. 20 to Fig. 23.

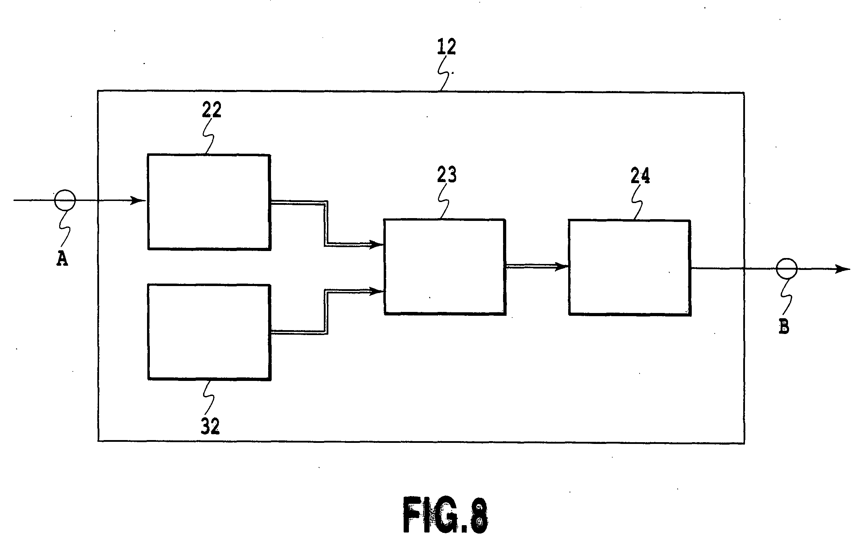

Fig. 8 shows an FM batch conversion circuit that uses an optical frequency modulation portion and an optical frequency local oscillation portion. The FM batch conversion circuit 12 of Fig. 8 includes an optical frequency modulation portion 22, an optical combiner 23, an optical detector 24, and an optical frequency local oscillation portion 32. When frequency modulation is performed with a frequency fs by use of a carrier light source having an optical frequency fo in the optical frequency modulation portion 22 of the FM batch conversion circuit 12, an optical frequency Ffmld of an optical signal in the output of the optical frequency modulation portion 22 is expressed as in the following equation:

$$\mathrm{Ffmld=fo+\delta f \bullet sin(2\pi \bullet fs \bullet t) \quad (1)}$$

where δf is a frequency deviation. A DFB-LD (Distributed Feed-Back Laser Diode) may be used as the carrier light source of the optical frequency modulation portion 22.

In the optical frequency local oscillation portion 32, oscillation is per formed by use of an oscillation light source having an optical frequency fl. An optical signal from the optical frequency local oscillation portion 32 and an optical signal from the optical frequency modulation portion 22 are combined by the optical combiner 23. The DFB-LD is used as the oscillation light source of the optical frequency local oscillation portion 32. The two optical signals combined by the optical combiner 23 are detected by a photodiode that is the optical heterodyne detector 24. The frequency f of the electric signal detected thereby is expressed as follows:

$$\mathrm{f=fo-fl+\delta f \bullet sin(2\pi \bullet fs \bullet t) \quad (2)}$$

Herein, if the optical frequency of the carrier light source of the optical frequency modulation portion 22 and the optical frequency of the oscillation light source of the optical frequency local oscillation portion 32 are caused to come close to each other, it is possible to obtain an electric signal whose frequency has been modulated to have an intermediate frequency fi=fo-fl of several GHz and have a frequency deviation δf as shown in Fig. 2B.

Generally, the modulation by an input electric current allows the DFB-LD to have an optical frequency varied in the range of several GHz in accordance with the input electric current, and hence a value of several GHz can be obtained as the frequency deviation δf. For example, multi-channel AM video signals or QAM video signals that have undergone frequency multiplication so as to have a frequency range of about 90 MHz to about 750 MHz can be converted by the FM batch conversion circuit into a frequency-modulated signal having a frequency band of about 6 GHz in which the intermediate frequency fi=fo-f1 becomes equal to about 3GHz as shown in Fig. 2B.

Therefore, a distortion generator circuit that can generate a distortion equal to a distortion generated by, for example, the FM batch conversion circuit can be formed by the FM batch conversion circuit that uses the optical frequency modulation portion and the optical frequency local oscillation portion.

(Sixth Embodiment)

This is another embodiment of the FM batch conversion circuit that can be used in the distortion generator circuit mentioned in each of the first to fourth embodiments, i.e., the FM batch conversion circuit 12 that can be used in the distortion generator circuit 16 shown in each of Fig. 4 to Fig. 7 and Fig. 20 to Fig. 23.

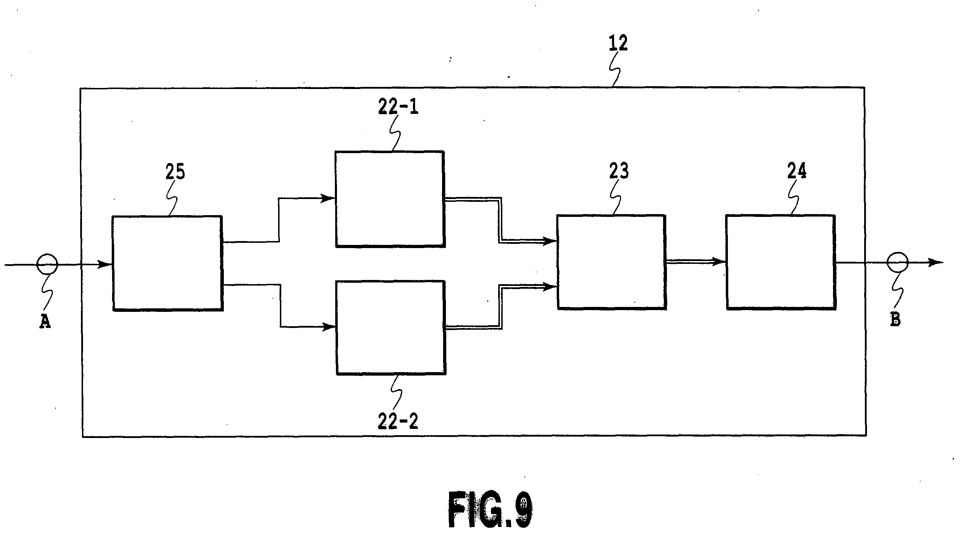

Fig. 9 shows an FM batch conversion circuit that uses two optical frequency modulation portions for a push-pull configuration. The FM batch conversion circuit 12 of Fig. 9 includes a differential distribution portion 25, an optical frequency modulation portion 22-1, an optical frequency modulation portion 22-2, an optical combiner 23, and an optical detector 24.

In the FM batch conversion circuit 12, a frequency-multiplexed video signal, such as that shown in Fig. 2A, is distributed by the differential distribution portion 25 into two electric signals having mutually opposite phases, i.e., having 0 phase and π phase. If a 0-phase electric signal of the two electric signals distributed by the differential distribution portion 25 is a modulated input, and if frequency modulation is performed by use of a carrier light source having an optical frequency fo1 in the optical frequency modulation portion 22-1, the optical frequency Ffmld1 of an optical signal in the output of the optical frequency modulation portion 22-1 is expressed as follows:

$$\mathrm{Ffmld1=fo1+(\delta f/2) \bullet sin(2\pi \bullet fs \bullet t) \quad (3)}$$

where δf/2 is a frequency deviation. In Equation (3), the modulated signal is a signal having a frequency fs. If a π-phase electric signal of the two electric signals distributed by the differential distribution portion 25 is a modulated input, and if frequency modulation is performed by use of a carrier light source having an optical frequency fo2 in the optical frequency modulation portion 22-2, the optical frequency Ffmld2 of an optical signal in the output of the optical frequency modulation portion 22-2 is expressed as follows:

$$Ffmld2=fo2-(\delta f/2)\bullet sin(2\pi\bullet fs\bullet t)\quad(4)$$

A DFB-LD (Distributed Feed-Back Laser Diode) can be used as a carrier light source for the optical frequency modulation portions 22-1 and 22-2.

Outputs emitted from the optical frequency modulation portions 22-1 and 22-2 are combined by the optical combiner 23, and the two optical signals combined by the optical combiner 23 are subjected to heterodyne detection by the optical detector 23. A photodiode that functions as a heterodyne detector can be used as the optical detector. The frequency f of the electric signal subjected to heterodyne detection by the optical detector 24 is expressed as a frequency equal to a difference between the values shown in Equations (3) and (4) as follows:

$$f=fo1-fo2+\delta f\bullet sin(2\pi\bullet fs\bullet t)\quad(5)$$

Herein, if the optical frequency of the carrier light source of the optical frequency modulation portion 22-1 and the optical frequency of the carrier light source of the optical frequency modulation portion 22-2 are caused to come close to each other, it is possible to obtain an electric signal whose frequency is modulated to have an intermediate frequency fi=fo-fl of several GHz and have a frequency deviation δf as shown in Fig. 2B.

Generally, the modulation by an input electric current allows the DFB-LD to have an optical frequency varied in the range of several GHz in accordance with the input electric current, and hence a value of several GHz can be obtained as the frequency deviation δf. For example, multi-channel AM video signals or QAM video signals that have undergone frequency multiplication so as to have a frequency range of about 90 MHz to about 750 MHz can be converted by the FM batch conversion circuit into a frequency-modulated signal having a frequency band of about 6 GHz in which the intermediate frequency fi=fo-f1 becomes about 3GHz as shown in Fig. 2B.

Therefore, a distortion generator circuit that can generate a distortion equal to a distortion generated by, for example, the FM batch conversion circuit can be formed by the FM batch conversion circuit that uses the two optical frequency modulation portions for a push-pull configuration.

(Seventh Embodiment)

This is still another embodiment of the FM batch conversion circuit that can be used in the distortion generator circuit mentioned in each of the first to fourth embodiments, i.e., the FM batch conversion circuit 12 that can be used in the distortion generator circuit 16 shown in each of Fig. 4 to Fig. 7 and Fig. 20 to Fig. 23.

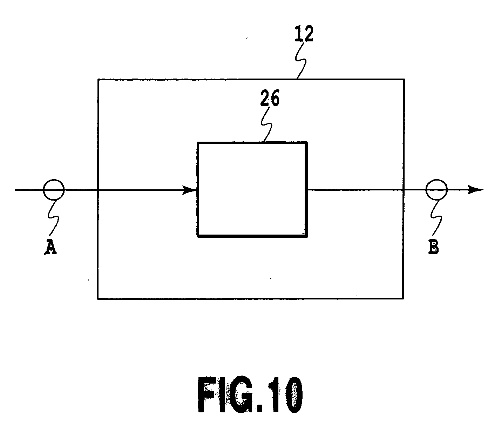

Fig. 10 shows an FM batch conversion circuit that uses a voltage-controlled oscillator. The FM batch conversion circuit 12 of Fig. 10 includes a voltage-controlled oscillator 26.

In the FM batch conversion circuit 12, a frequency-multiplexed video signal, such as that shown in Fig. 2A, is subjected to frequency modulation with a frequency fo as the center frequency in the voltage-controlled oscillator 26, and a frequency fv of an electric signal that has been output is expressed as follows when the frequency deviation is δd:

$$fv=fo+\delta f\bullet sin(2\pi\bullet fs\bullet t)\quad(6)$$

Thus, a frequency-modulated signal which has an intermediate frequency fi=fo and a frequency deviation δf is obtained. In Equation (6), the modulated signal is a signal having a frequency fs.

For example, multi-channel AM video signals or QAM video signals that have undergone frequency multiplication so as to have a frequency range of about 90 MHz to about 750 MHz can be converted by the FM batch conversion circuit into a frequency-modulated signal having a frequency band of about 6 GHz in which the intermediate frequency fi=fo becomes equal to about 3 GHz as shown in Fig. 2B.

Therefore, a distortion generator circuit that can generate a distortion equal to a distortion generated by, for example, the FM batch conversion circuit can be formed by the FM batch conversion circuit that uses the voltage-controlled oscillator.

(Eighth Embodiment)

This is still another embodiment of the FM batch conversion circuit that can be used in the distortion generator circuit mentioned in each of the first to fourth embodiments, i.e., the FM batch conversion circuit 12 that can be used in the distortion generator circuit 16 shown in each of Fig. 4 to Fig. 7 and Fig. 20 to Fig. 23.

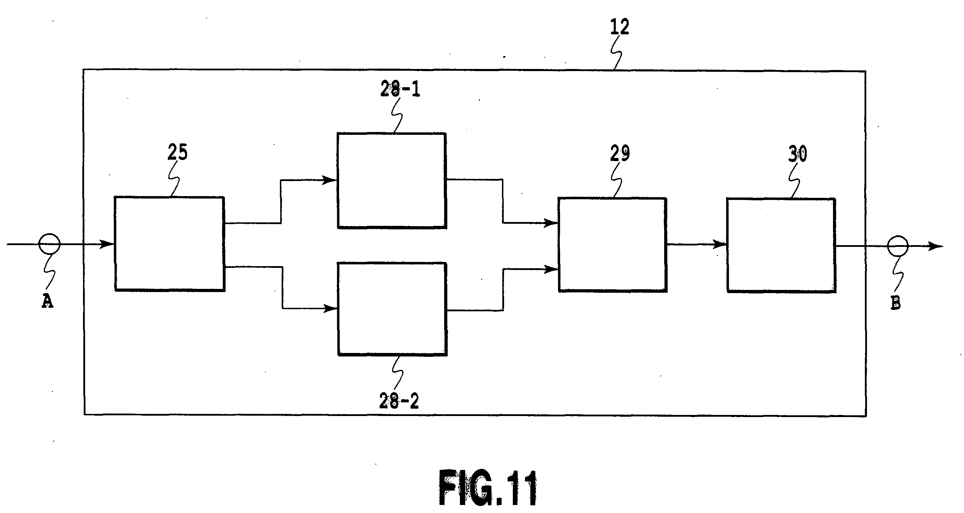

Fig. 11 shows a configuration of an FM batch conversion circuit that uses two voltage-controlled oscillators for a push-pull configuration. The FM batch conversion circuit 12 of Fig. 11 includes a differential distribution portion 25, a voltage-controlled oscillator 28-1, a voltage-controlled oscillator 28-2, a mixer 29, and a low-pass filter 30.

In the FM batch conversion circuit 12, a frequency-multiplexed video signal, such as that shown in Fig. 2A, is distributed by the differential distribution portion 25 into two electric signals having mutually opposite phases. If a 0-phase electric signal of the two electric signals distributed by the differential distribution portion 25 is subjected to frequency modulation with a frequency fo as the center frequency in the voltage-controlled oscillator 28-1, a frequency fv1 of an electric signal output therefrom is expressed as follows:

$$fv1=fo1+(\delta f/2) \bullet \sin(2\pi \bullet fs \bullet t) \quad (7)$$

where $\delta f/2$ is a frequency deviation. Thus, a frequency-modulated signal that has an intermediate frequency fi=fo1 and a frequency deviation $\delta f/2$ is obtained. In Equation (7), the modulated signal is a signal having a frequency fs. If a $\pi$-phase electric signal of the two electric signals distributed by the differential distribution portion 25 is a modulated input, and is subjected to frequency modulation with a frequency fo1 as the center frequency in the voltage-controlled oscillator 28-2, a frequency fv2 of an electric signal output therefrom is expressed as follows:

$$fv2=fo2-(\delta f/2) \bullet \sin(2\pi \bullet fs \bullet t) \quad (8)$$

where $\delta f/2$ is a frequency deviation. Thus, a frequency-modulated signal which has an intermediate frequency fi=fo2 and a frequency deviation $\delta f/2$ is obtained.

Outputs from the voltage-controlled oscillators 28-1 and 28-2 are mixed by the mixer 29. The two electric signals mixed by the mixer 29 are then smoothed by the low-pass filter 30. The frequency f of the electric signal smoothed by the low-pass filter 30 that passes through an electric signal having a frequency equal to a difference between the intermediate frequency fo1 and the intermediate frequency fo2 is expressed as that of an electric signal having a frequency equal to a difference between the value of Equation (7) and the value of Equation (8) as follows:

$$f=fo1-fo2+\delta f \bullet \sin(2\pi \bullet fs \bullet t) \quad (9)$$

Herein, it is possible to obtain an electric signal whose frequency is modulated to have an intermediate frequency fi=fo1-fo2 of several GHz and have a frequency deviation $\delta f$ as shown in Fig. 2B.

For example, multi-channel AM video signals or QAM video signals that have undergone frequency multiplication so as to have a frequency range of about 90 MHz to about 750 MHz can be converted by the FM batch conversion circuit into a frequency-modulated signal having a frequency band of about 6 GHz in which the intermediate frequency fi=fo-fl becomes about 3GHz as shown in Fig. 2B.

Therefore, a distortion generator circuit that can generate a distortion equal to a distortion generated by, for example, the FM batch conversion circuit can be formed by the FM batch conversion circuit that uses the two voltage-controlled oscillators for a push-pull configuration.

(Ninth Embodiment)

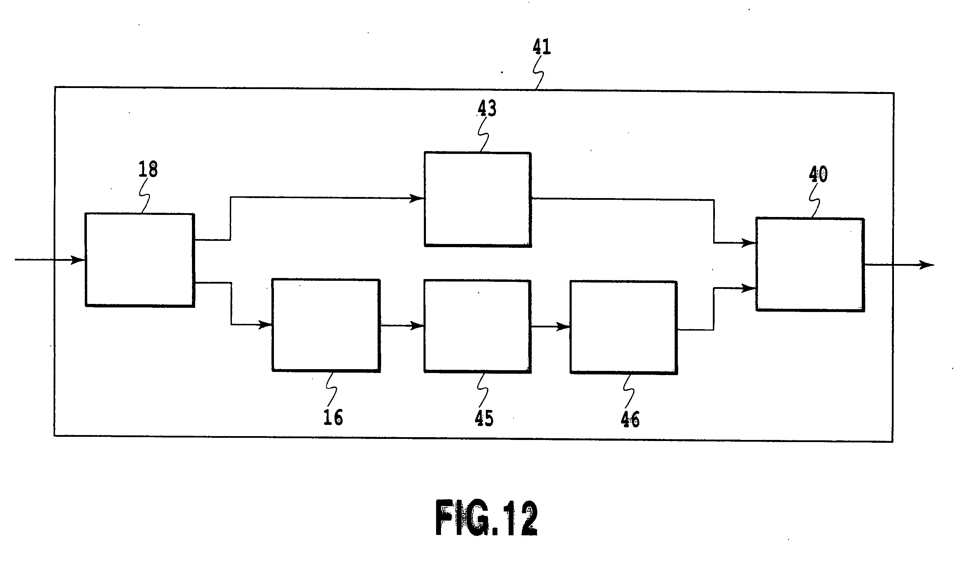

This embodiment is concerned with a pre-distortion circuit that uses any one of the distortion generator circuits described in the first to eighth embodiments. Fig. 12 shows a configuration of the pre-distortion circuit according to this embodiment.

The pre-distortion circuit 41 of Fig. 12 includes a distortion generator circuit 16, a differential distributor 18, a differential combiner 40, a delay line 43, an amplitude adjustment circuit 45, and a delay adjustment circuit 46.

In Fig. 12, the differential distributor 18 distributes an input electric signal into two electric signals having mutually opposite phases, and outputs the two electric signals to the delay line 43 and the distortion generator circuit 16, respectively. The distortion generator circuit 16 according to this embodiment outputs an anti-phase distortion opposite to a distortion generated by each of the FM batch conversion circuit and the FM demodulation circuit or to a distortion generated by each of the FM batch conversion circuit, the light source, the photoelectric conversion circuit, and the FM demodulation circuit of the distortion generator circuit 16, which is one of the distortion generator circuits described in the first to eighth embodiments. The delay line 43 delays one output from the differential distributor 18, and outputs this to the differential combiner 40. The distortion generator circuit 16 outputs a distortion from the other output emitted from the differential distributor 18 to the amplitude adjustment circuit 45. The amplitude adjustment circuit 45 and the delay adjustment circuit 46 subject the output emitted from the distortion generator circuit 16 to amplitude adjustment and delay adjustment so that a distortion generated by, for example, the FM batch conversion circuit to which the pre-distortion circuit is connected becomes minimum. The adjusted signal is output to the differential combiner 40. The differential combiner 40 subjects the output from the delay line 43 and the output from the delay adjustment circuit 46 to differential combining with a phase with which a distortion generated by a circuit to which the pre-distortion circuit 41 is connected is cancelled. The thus combined signal is then output therefrom.

Let the phases of outputs of the differential distributor 18, by which an input electric signal is distributed into two electric signals having mutually opposite phases, be 0 phase and $\pi$ phase. Further, let the output to the delay line 43 be 0 phase, and let the output to the distortion generator circuit 16 be $\pi$ phase. Furthermore, let the phases of inputs of the differential combiner 40, by which the output from the delay line 43 and the output from the delay adjustment circuit 46 are subjected to differential combining and are output, be 0 phase and $\pi$ phase. If the output from the delay line 43 is 0 phase, and if the output from the delay adjustment circuit 46 is $\pi$ phase, an in-phase relationship is established between the phase of an electric signal of the output of the pre-distortion circuit 41 and the phase of an electric signal of the input of the pre-distortion circuit 41. Accordingly, a distortion in the output of the pre-distortion circuit 41 becomes opposite in phase to a distortion generated by each of the FM batch conversion circuit and the FM demodulation circuit of the distortion generator circuit 16 or to a distortion generated by each of the FM batch conversion circuit, the light source, the photoelectric conversion circuit, and the FM demodulation circuit.

Let the phases of outputs of the differential distributor 18, by which an input electric signal is distributed into two electric signals having mutually opposite phases, be 0 phase and $\pi$ phase. Further, let the output to the delay line 43 be $\pi$ phase, and let the output to the distortion generator circuit 16 be 0 phase. Furthermore, let the phases of inputs of the differential combiner 40, by which the output from the delay line 43 and the output from the delay adjustment circuit 46 are subjected to differential combining and are output, be 0 phase and $\pi$ phase. If the output from the delay line 43 is $\pi$ phase, and if the output from the delay adjustment circuit 46 is 0 phase, an in-phase relationship is established between the phase of an electric signal of the output of the pre-distortion circuit 41 and the phase of an electric signal of the input of the pre-distortion circuit 41. Accordingly, a distortion in the output of the pre-distortion circuit 41 becomes opposite in phase to a distortion generated by each of the FM batch conversion circuit and the FM demodulation circuit of the distortion generator circuit 16 or to a distortion generated by each of the FM batch conversion circuit, the light source, the photoelectric conversion circuit, and the FM demodulation circuit.

In the pre-distortion circuit 41, the operation is performed in this manner, and hence such an anti-phase distortion as to offset the distortion of a wide-band signal, such as a video signal, generated by, for example, an FM batch conversion circuit to which the pre-distortion circuit 41 is connected can be pre-added to the input wide-band signal, and this signal can be output therefrom.

Since both of the amplitude adjustment circuit 45 and the delay adjustment circuit 46 are linear circuits, the arrangement order of these circuits may be reversed. Additionally, since the amplitude adjustment circuit 45 and the delay adjustment circuit 46 adjust the amplitude and the delay of the input to the differential combiner 40, these circuits 45 and 46 may be disposed on the side of the delay line 43 so that the delay line 43 and its function degenerate.

Therefore, in the pre-distortion circuit 41 according to this embodiment, it is possible to output a wide-band signal to which an anti-phase distortion opposite to a distortion generated by, for example, an FM batch conversion circuit connected to the subsequent stage of the pre-distortion circuit 41 has been added.

(Tenth Embodiment)

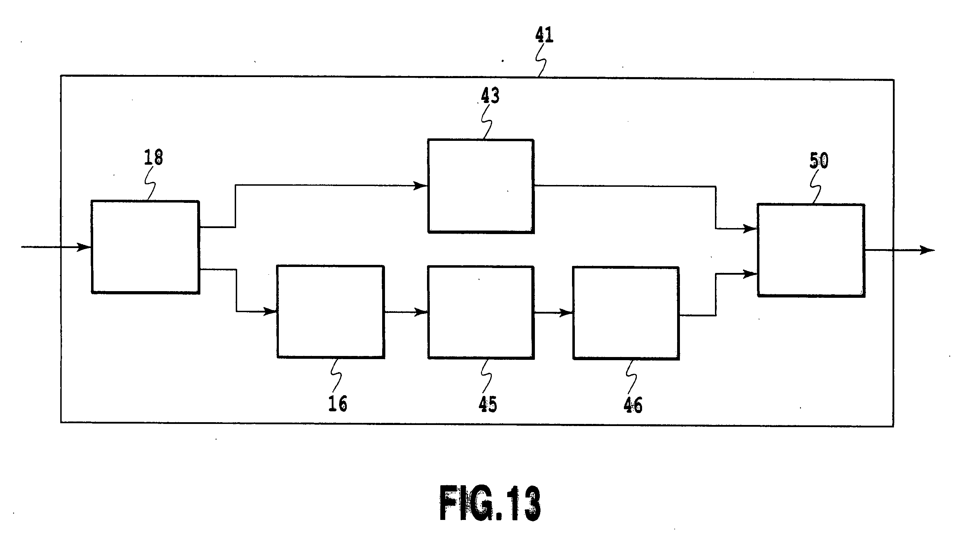

This embodiment is concerned with a pre-distortion circuit that uses any one of the distortion generator circuits described in the first to eighth embodiments. Fig. 13 shows a configuration of the pre-distortion circuit according to this embodiment. The pre-distortion circuit 41 of Fig. 13 includes a distortion generator circuit 16, a differential distributor 18, a delay line 43, an amplitude adjustment circuit 45, a delay adjustment circuit 46, and an in-phase combiner 50.

In Fig. 13, the differential distributor 18 distributes an input electric signal into two electric signals having mutually opposite phases, and outputs the two electric signals to the delay line 43 and the distortion generator circuit 16, respectively. The distortion generator circuit 16 according to this embodiment outputs the same distortion in phase as a distortion generated by each of the FM batch conversion circuit and the FM demodulation circuit or as a distortion generated by each of the FM batch conversion circuit, the light source, the photoelectric conversion circuit, and the FM demodulation circuit of the distortion generator circuit 16, which is one of the distortion generator circuits described in the first to eighth embodiments. The delay line 43 delays one output from the differential distributor 18, and outputs this to the in-phase combiner 50. The distortion generator circuit 16 outputs a distortion from the other output emitted from the differential distributor 18 to the amplitude adjustment circuit 45. The amplitude adjustment circuit 45 and the delay adjustment circuit 46 subject the output emitted from the distortion generator circuit 16 to amplitude adjustment and delay adjustment so that a distortion generated by, for example, the FM batch conversion circuit to which the pre-distortion circuit is connected becomes minimum. The adjusted signal is output to the in-phase combiner 50. The in-phase combiner 50 subjects the output from the delay line 43 and the output from the delay adjustment circuit 46 to in-phase combining with a phase with which a distortion generated by a circuit to which the pre-distortion circuit 41 is connected is cancelled. The thus combined signal is then output therefrom.

Let the phases of outputs of the differential distributor 18, by which an input electric signal is distributed into two electric signals having mutually opposite phases, be 0 phase and π phase. If the output to the delay line 43 is 0 phase, and if the output to the distortion generator circuit 16 is π phase, an in-phase relationship is established between the phase of an electric signal of the output of the pre-distortion circuit 41 and the phase of an electric signal of the input of the pre-distortion circuit 41. Accordingly, a distortion in the output of the pre-distortion circuit 41 becomes opposite in phase to a distortion generated by each of the FM batch conversion circuit and the FM demodulation circuit of the distortion generator circuit 16 or to a distortion generated by each of the FM batch conversion circuit, the light source, the photoelectric conversion circuit, and the FM demodulation circuit.

Let the phases of outputs of the differential distributor 18, by which an input electric signal is distributed into two electric signals having mutually opposite phases, be 0 phase and π phase. If the output to the delay line 43 is π phase, and if the output to the distortion generator circuit 16 is 0 phase, and if the phases of inputs of the in-phase combiner 50, which subjects the output from the delay line 43 and the output from the delay adjustment circuit 46 to in-phase combining and outputs the combined signal, are both π phases (i.e., the in-phase combiner is an inversion type), an in-phase relationship is established between the phase of an electric signal of the output of the pre-distortion circuit 41 and the phase of an electric signal of the input of the pre-distortion circuit 41. Accordingly, a distortion in the output of the pre-distortion circuit 41 becomes opposite in phase to a distortion generated by each of the FM batch conversion circuit and the FM demodulation circuit of the distortion generator circuit 16 or to a distortion generated by each of the FM batch conversion circuit, the light source, the photoelectric conversion circuit, and the FM demodulation circuit.

In the pre-distortion circuit 41, the operation is performed in this manner, and hence such an anti-phase distortion as to offset the distortion of a wide-band signal, such as a video signal, generated by, for example, an FM batch conversion circuit to which the pre-distortion circuit 41 is connected can be pre-added to the input wide-band signal, and this signal can be output therefrom.

Since both of the amplitude adjustment circuit 45 and the delay adjustment circuit 46 are linear circuits, the arrangement order of these circuits may be reversed. Additionally, since the amplitude adjustment circuit 45 and the delay adjustment circuit 46 adjust the amplitude and the delay of the input to the differential combiner 40, these circuits 45 and 46 may be disposed on the side of the delay line 43 so that the delay line 43 and its function degenerate.

Therefore, in the pre-distortion circuit 41 according to this embodiment, it is possible to output a wide-band signal to which an anti-phase distortion opposite to a distortion generated by, for example, an FM batch conversion circuit connected to the subsequent stage of the pre-distortion circuit 41 has been added.

(Eleventh Embodiment)

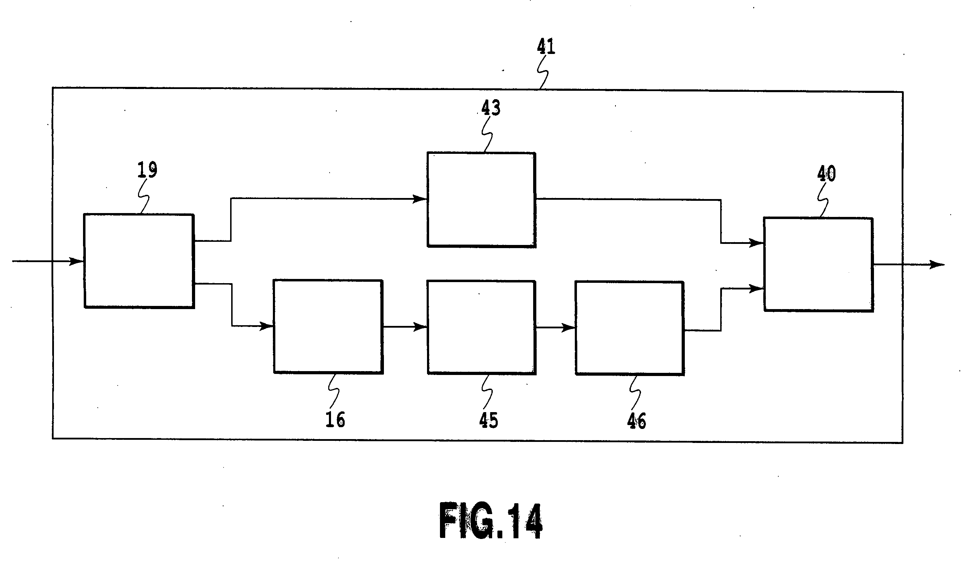

This embodiment is concerned with a pre-distortion circuit that uses any one of the distortion generator circuits described in the first to eighth embodiments. Fig. 14 shows a configuration of the pre-distortion circuit according to this embodiment. The pre-distortion circuit 41 of Fig. 14 includes a distortion generator circuit 16, an in-phase distributor 19, a differential combiner 40, a delay line 43, an amplitude adjustment circuit 45, and a delay adjustment circuit 46.

In Fig. 14, the in-phase distributor 19 distributes an input electric signal into two electric signals one of which is output to the delay line 43 and the other one of which is output to the distortion generator circuit 16. The distortion generator circuit 16 according to this embodiment outputs the same distortion in phase as a distortion generated by each of the FM batch conversion circuit and the FM demodulation circuit or as a distortion generated by each of the FM batch conversion circuit, the light source, the photoelectric conversion circuit, and the FM demodulation circuit of the distortion generator circuit 16, which is one of the distortion generator circuits described in the first to eighth embodiments. The delay line 43 delays one output from the differential distributor 18, and outputs this to the differential combiner 40. The distortion generator circuit 16 outputs a distortion from the other output emitted from the in-phase distributor 19 to the amplitude adjustment circuit 45. The amplitude adjustment circuit 45 and the delay adjustment circuit 46 subject the output emitted from the distortion generator circuit 16 to amplitude adjustment and delay adjustment so that a distortion generated by, for example, the FM batch conversion circuit to which the pre-distortion circuit is connected becomes minimum. The adjusted signal is output to the differential combiner 40. The differential combiner 40 subjects the output from the delay line 43 and the output from the delay adjustment circuit 46 to differential combining with a phase with which a distortion generated by a circuit to which the pre-distortion circuit 41 is connected is cancelled. The thus combined signal is then output therefrom.

Let the phases of inputs of the differential combiner 40, by which the output from the delay line 43 and the output from the delay adjustment circuit 46 are subjected to differential combining and are output, be 0 phase and $\pi$ phase. If the output from the delay line 43 is 0 phase, and if the output from the delay adjustment circuit 46 is $\pi$ phase, an in-phase relationship is established between the phase of an electric signal of the output of the pre-distortion circuit 41 and the phase of an electric signal of the input of the pre-distortion circuit 41. Accordingly, a distortion in the output of the pre-distortion circuit 41 becomes opposite in phase to a distortion generated by each of the FM batch conversion circuit and the FM demodulation circuit of the distortion generator circuit 16 or to a distortion generated by each of the FM batch conversion circuit, the light source, the photoelectric conversion circuit, and the FM demodulation circuit.

Let the phases of outputs of the in-phase distributor 19, by which an input electric signal is distributed into two electric signals, be both $\pi$ phases (i.e., let the in-phase distributor be an inversion type), and let the phases of inputs of the differential combiner 40, by which the output from the delay line 43 and the output from the delay adjustment circuit 46 are subjected to differential combining and are output, be 0 phase and $\pi$ phase. If the output from the delay line 43 is $\pi$ phase, and if the output from the delay adjustment circuit 46 is 0 phase, an in-phase relationship is established between the phase of an electric signal of the output of the pre-distortion circuit 41 and the phase of an electric signal of the input of the pre-distortion circuit 41. Accordingly, a distortion in the output of the pre-distortion circuit 41 becomes opposite in phase to a distortion generated by each of the FM batch conversion circuit and the FM demodulation circuit of the distortion generator circuit 16 or to a distortion generated by each of the FM batch conversion circuit, the light source, the photoelectric conversion circuit, and the FM demodulation circuit.

In the pre-distortion circuit 41, the operation is performed in this manner, and hence such an anti-phase distortion as to offset the distortion of a wide-band signal, such as a video signal, generated by, for example, an FM batch conversion circuit to which the pre-distortion circuit 41 is connected can be pre-added to the input wide-band signal, and this signal can be output therefrom.

Since both of the amplitude adjustment circuit 45 and the delay adjustment circuit 46 are linear circuits, the arrangement order of these circuits may be reversed. Additionally, since the amplitude adjustment circuit 45 and the delay adjustment circuit 46 adjust the amplitude and the delay of the input to the differential combiner 40, these circuits 45 and 46 may be disposed on the side of the delay line 43 so that the delay line 43 and its function degenerate.

Therefore, in the pre-distortion circuit 41 according to this embodiment, it is possible to output a wide-band signal to which an anti-phase distortion opposite to a distortion generated by, for example, an FM batch conversion circuit connected to the subsequent stage of the pre-distortion circuit 41 has been added.

(Twelfth Embodiment)

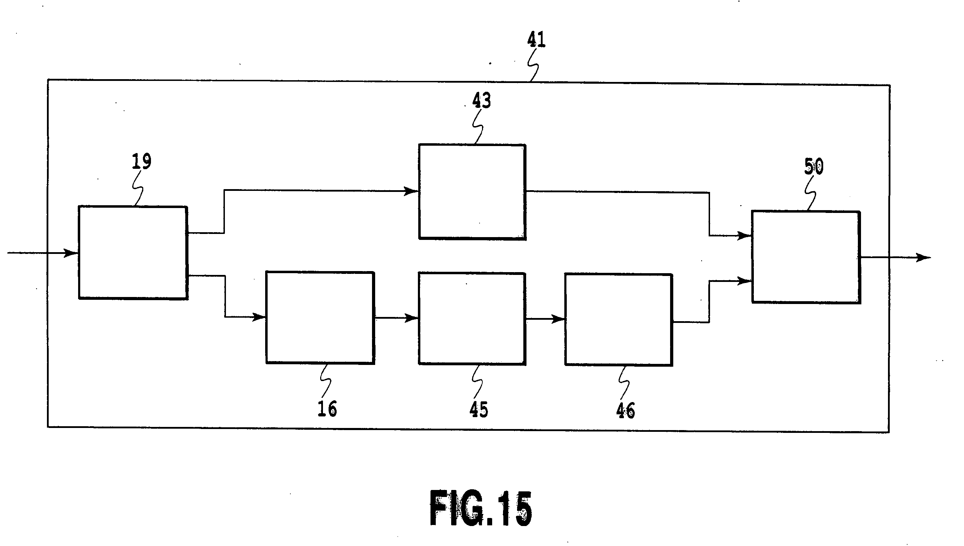

This embodiment is concerned with a pre-distortion circuit that uses any one of the distortion generator circuits described in the first to eighth embodiments. Fig. 15 shows a configuration of the pre-distortion circuit according to this embodiment. The pre-distortion circuit 41 of Fig. 15 includes a distortion generator circuit 16, an in-phase distributor 19, a delay line 43, an amplitude adjustment circuit 45, a delay adjustment circuit 46, and an in-phase combiner 50.

In Fig. 15, the in-phase distributor 19 distributes an input electric signal into two electric signals one of which is output to the delay line 43 and the other one of which is output to the distortion generator circuit 16. The distortion generator circuit 16 according to this embodiment outputs an anti-phase distortion opposite to a distortion generated by each of the FM batch conversion circuit and the FM demodulation circuit or to a distortion generated by each of the FM batch conversion circuit, the light source, the photoelectric conversion circuit, and the FM demodulation circuit of the distortion generator circuit 16, which is one of the distortion generator circuits described in the first to eighth embodiments. The delay line 43 delays one output from the in-phase distributor 19, and outputs this to the in-phase combiner 50. The distortion generator circuit 16 outputs a distortion, which is described in any one of the first to eighth embodiments, from the other output emitted from the in-phase distributor 19 to the amplitude adjustment circuit 45. The amplitude adjustment circuit 45 and the delay adjustment circuit 46 subject the output emitted from the distortion generator circuit 16 to amplitude adjustment and delay adjustment so that a distortion generated by, for example, the FM batch conversion circuit to which the pre-distortion circuit is connected becomes minimum. The adjusted signal is output to the in-phase combiner 50. The in-phase combiner 50 subjects the output emitted from the delayline43 and the output emitted from the delay adjustment circuit 46 to in-phase combining with a phase with which a distortion generated by a circuit to which the pre-distortion circuit 41 is connected is cancelled. The thus combined signal is then output therefrom.

An in-phase relationship is established between the phase of an electric signal of the output of the pre-distortion circuit 41 and the phase of an electric signal of the input of the pre-distortion circuit 41. Accordingly, a distortion in the output of the pre-distortion circuit 41 becomes opposite in phase to a distortion generated by each of the FM batch conversion circuit and the FM demodulation circuit of the distortion generator circuit 16 or to a distortion generated by each of the FM batch conversion circuit, the light source, the photoelectric conversion circuit, and the FM demodulation circuit.

Let the phases of outputs of the in-phase distributor 19, by which an input electric signal is distributed into two electric signals, be both π phases (i.e., let the in-phase distributor be an inversion type), and let the phases of inputs of the in-phase combiner 50, by which the output from the delay line 43 and the output from the delay adjustment circuit 46 are subjected to in-phase combining and are output, be both π phases (i.e., let the in-phase combiner be an inversion type). If the output from the delay line 43 is π phase, and if the output from the delay adjustment circuit 46 is 0 phase, an in-phase relationship is established between the phase of an electric signal of the output of the pre-distortion circuit 41 and the phase of an electric signal of the input of the pre-distortion circuit 41. Accordingly, a distortion in the output of the pre-distortion circuit 41 becomes opposite in phase to a distortion generated by each of the FM batch conversion circuit and the FM demodulation circuit of the distortion generator circuit 16 or to a distortion generated by each of the FM batch conversion circuit, the light source, the photoelectric conversion circuit, and the FM demodulation circuit.

In the pre-distortion circuit 41, the operation is performed in this manner, and hence such an anti-phase distortion as to offset the distortion of a wide-band signal, such as a video signal, generated by, for example, an FM batch conversion circuit to which the pre-distortion circuit 41 is connected can be pre-added to the input wide-band signal, and this signal can be output therefrom.

Since both of the amplitude adjustment circuit 45 and the delay adjustment circuit 46 are linear circuits, the arrangement order of these circuits may be reversed. Additionally, since the amplitude adjustment circuit 45 and the delay adjustment circuit 46 adjust the amplitude and the delay of the input to the in-phase combiner 50, these circuits 45 and 46 may be disposed on the side of the delay line 43 so that the delay line 43 and its function degenerate.

Therefore, in the pre-distortion circuit 41 according to this embodiment, it is possible to output a wide-band signal to which an anti-phase distortion opposite to a distortion generated by, for example, an FM batch conversion circuit connected to the subsequent stage of the pre-distortion circuit 41 has been added.

(Thirteenth Embodiment)

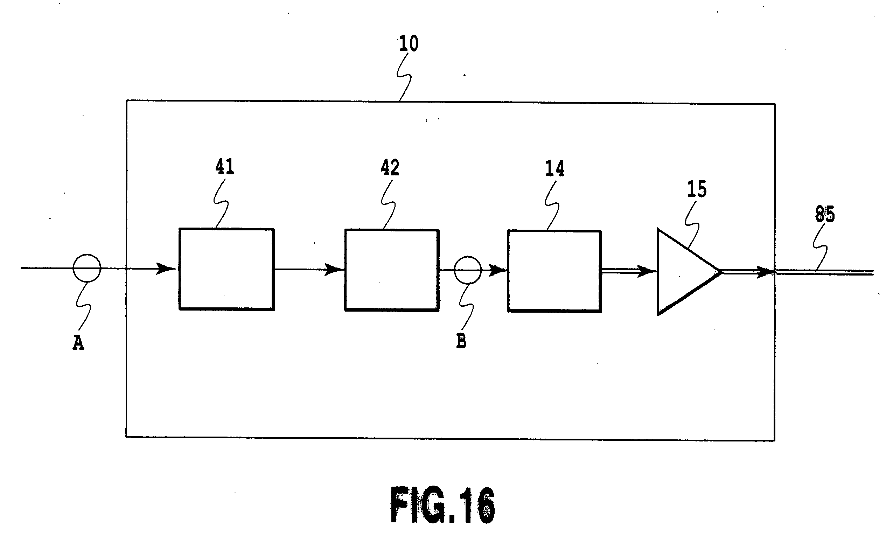

This embodiment is concerned with an optical signal transmitter that uses the pre-distortion circuit described in each of the ninth to twelfth embodiments. More particularly, this embodiment is concerned with an optical signal transmitter that uses the pre-distortion circuit including the distortion generator circuit described in each of the first to eighth embodiments. Fig. 16 shows a configuration of an optical signal transmitter according to this embodiment. The optical signal transmitter 10 of Fig. 16 includes a pre-distortion circuit 41, a second FM batch conversion circuit 42, a light source 14 serving as a transmission circuit, and an optical amplifier circuit 15. The optical signal transmitter 10 transmits an optical signal to an optical signal transmission path 85.

In Fig. 16, when a wide-band signal, such as a video signal, is input to the pre-distortion circuit 41, the pre-distortion circuit 41 adds an anti-phase distortion opposite to a distortion generated by, for example, an FM batch conversion circuit to the wide-band signal, and outputs this signal to the second FM batch conversion circuit 42. The second FM batch conversion circuit 42 subjects the output emitted from the pre-distortion circuit 41 to frequency modulation, and outputs this therefrom. The light source 14 serving as a transmission circuit subjects the output emitted from the FM batch conversion circuit to intensity modulation, and outputs an intensity-modulated optical signal therefrom. A DFB-LD can be used as the light source. If the optical power to be sent from the light source is insufficient, the optical amplifier circuit 15 is added to the transmission circuit. The optical signal from the transmission circuit is transmitted to the optical signal transmission path 85.

An optical signal receiver is connected to the opposite end of the optical signal transmission path 85, and receives an optical signal. The pre-distortion circuit 41 included in the optical signal transmitter 10 pre-adds such an anti-phase distortion as to offset a distortion generated by, for example, an FM batch conversion circuit to this optical signal. Therefore, a wide-band signal, such as a video signal, having less distortion can be obtained by allowing the optical signal receiver connected to the optical signal transmitter to subject the wide-band signal to frequency demodulation.

(Fourteenth Embodiment)

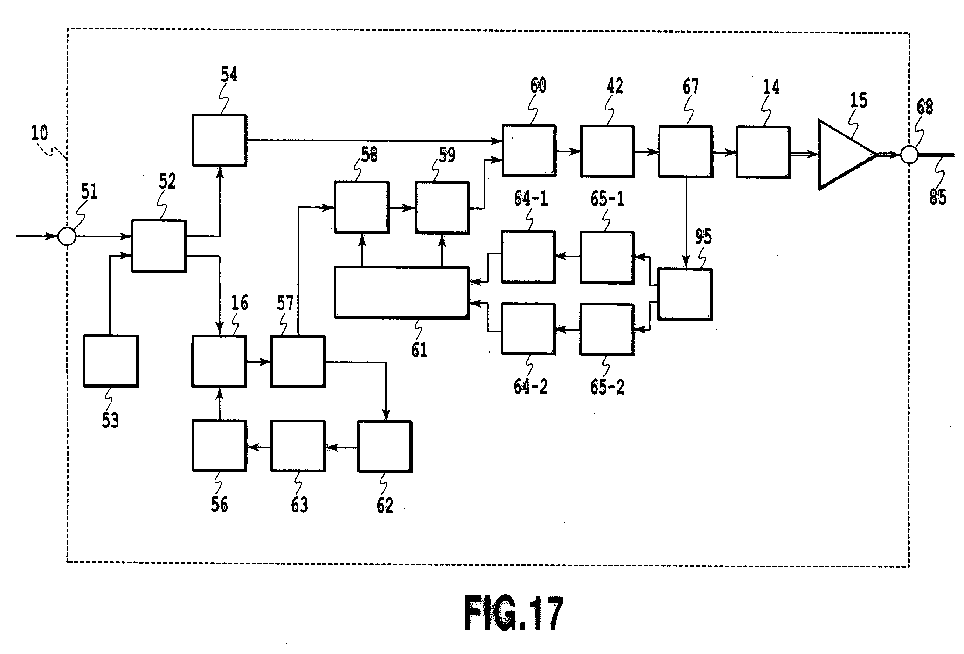

This embodiment is concerned with an optical signal transmitter that uses the distortion generator circuit described in each of the first to eighth embodiments. Fig. 17 shows a configuration of an optical signal transmitter according to this embodiment. The optical signal transmitter 10 of Fig. 17 includes a light source 14 serving as a transmission circuit, an optical amplifier circuit 15, a distortion generator circuit 16 which is any one of the distortion generator circuits described in the first to eighth embodiments, a second FM batch conversion circuit 42, an input terminal 51, a combining distributor 52, a pilot signal oscillator 53, a delay line 54, a control circuit 56 serving as a first control circuit, a distributor 57 serving as a first distributor, an amplitude adjuster 58 serving as a part of an amplitude-delay adjuster, a delay adjuster 59 serving as a part of the amplitude-delay adjuster, a differential combiner 60, a control circuit 61 serving as a second control circuit, a band-pass filter 62 serving as a first band-pass filter, a level detector 63 serving as a first level detector, a level detector 64-1 serving as a second level detector, a level detector 64-2 serving as a third level detector, a band-pass filter 65-1 serving as a secondband-pass filter, a band-pass filter 65-2 serving as a third band-pass filter, a distributor 67 serving as a second distributor, an output terminal 68, and a second FM demodulation circuit 95. The optical signal transmitter 10 including these elements transmits an optical signal to an optical signal transmission path 85.

In Fig. 17, the pilot signal oscillator 53 outputs a pilot signal having a frequency fo. The frequency fo is set to be a frequency of a frequency band that is not used as a video channel. In other words, the frequency fo is set to be included in a frequency range of input frequency-multiplexed AM and QAM video signals and to be a frequency of a frequency channel where these video signals are not placed. Additionally, a frequency $3{\times}$fo of a higher harmonic wave that is three times as high as the frequency fo is set to be included in a frequency range of AM and QAM video signals. For example, the frequency $3{\times}$fo is set to be included in a range of from 93 MHz to 747 MHz, which is a frequency range of the input frequency-multiplexed AM and QAM video signals.

Awide-band signal, such as a video signal, passes through the input terminal 51, and is input into the combining distributor 52. The combining distributor 52 combines the input electric signal and a pilot signal emitted from the pilot signal oscillator, and distributes a combined signal into two electric signals one of which is output to the distortion generator circuit 16 and the other one of which is output to the delay line 54. The delay line 54 delays the other output emitted from the combining distributor 52, and outputs this to the differential combiner 60. On the other hand, the distortion generator circuit 16 is any one of the distortion generator circuits described in the first to eighth embodiments. The distortion generator circuit 16 generates a distortion from the input signal, and outputs this to the distributor 57. The distributor 57 distributes the output emitted from the distortion generator circuit 16 into two electric signals one of which is output to the amplitude adjuster 58 and the other one of which is output to the band-pass filter 62. The band-pass filter 62 allows an electric signal having a frequency fo emitted from one output of the distributor 57 to pass therethrough, and outputs this to the level detector 63. The level detector 63 detects a signal level from the output of the band-pass filter 62, and outputs this to the control circuit 56.

The control circuit 56 controls an amplitude-delay adjustment circuit included in the distortion generator circuit 16 so that the output from the level detector 63 becomes minimum. To control the amplitude-delay adjustment circuit of the distortion generator circuit 16, adjustment amounts to control the amplitude amount and the delay amount are respectively input from the control circuit 56 as external inputs into the amplitude control terminal 101 of the amplitude adjustment circuit 38 and into the delay control terminal 102 of the delay adjustment circuit 39 of the distortion generator circuit 16 shown in Fig. 20 to Fig. 23. According to this control method, the set point of the amplitude amount and the set point of the delay amount of the amplitude-delay adjustment circuit of the distortion generator circuit 16 are alternately changed by slight degrees, and are controlled so that the output from the level detector 63 becomes minimum. The component of the frequency fo is removed from the output of the distortion generator circuit 16 by always or intermittently performing this control. In the distortion generator circuit, this control makes it possible to generate such an optimum amount of opposite distortion as to offset a distortion generated in, for example, an FM batch conversion circuit.

The other output of the distributor 57 is input to the amplitude adjuster 58. The amplitude adjuster 58 adjusts the amplitude amount, and outputs the amplitude-adjusted signal to the delay adjuster 59. The delay adjuster 59 adjusts the delay amount, and outputs the delay-adjusted signal to the differential combiner 60. Since both the amplitude adjuster 58 and the delay adjuster 59 are linear circuits, the arrangement order of these adjusters may be reversed. Additionally, since the amplitude adjuster 58 and the delay adjuster 59 adjust the amplitude and the delay of the input to the differential combiner 60, these adjusters 58 and 59 may be disposed on the side of the delay line 54 so that the delay line 54 and its function degenerate.

The differential combiner 60 combines the output from the delay line 54 and the output from the delay adjuster 59 in the state of mutually opposite phases, and outputs this to the second FM batch conversion circuit 42. The second FM batch conversion circuit 42 subjects the output emitted from the differential combiner 60 to frequency modulation, and outputs this to the distributor 67. The distributor 67 distributes the output emitted from the second FM batch conversion circuit 42 into two electric signals one of which is output to the light source 14 serving as a transmission circuit and the other one of which is output to the second FM demodulation circuit 95. The second FM demodulation circuit 95 subjects one output emitted from the distributor 67 to frequency demodulation, and outputs two frequency-demodulated electric signals. The two outputs emitted from the second FM demodulation circuit 95 are input into the band-pass filters 65-1 and 65-2, respectively. The band-pass filter 65-1 allows an electric signal having a frequency $2{\times}$fo to pass therethrough, whereas the band-pass filter 65-2 allows an electric signal having a frequency $3{\times}$fo to pass therethrough. The outputs from the band-pass filters 65-1 and 65-2 are input into the level detectors 64-1 and 64-2, respectively. The level detectors 64-1 and 64-2 detect the signal level of the frequency $2{\times}$fo and the signal level of the frequency $3{\times}$fo and outputs these to the control circuit 61.

The control circuit 61 controls the amplitude adjustment circuit 58 and the delay adjustment circuit 59 so that the outputs from the level detectors 64-1 and 64-2 become minimum. According to this control method, the set point of the amplitude amount of the amplitude adjustment circuit 58 and the set point of the delay amount of the delay adjustment circuit 59 are alternately changed by slight degrees, and are controlled so that the output from the level detector 64-1 becomes minimum. Thereafter, again, the set point of the amplitude amount of the amplitude adjustment circuit 58 and the set point of the delay amount of the delay adjustment circuit 59 are alternately changed by slight degrees, and are controlled so that the output from the level detector 64-2 becomes minimum. When this control is always or intermittently performed, the component of the frequency $2\times$fo and the component of the frequency $3\times$fo become minimum in the output emitted from the FM demodulation circuit in the optical signal receiver connected to the optical signal transmitter 10. A distortion generated by, for example, an FM batch conversion circuit can be offset by this control. That is, according to this control method, distortion compensation can be automatically made by pre-distortion.

The light source 14 serving as a transmission circuit subjects the output emitted from the distributor 67 to intensity modulation, and outputs an intensity-modulated optical signal therefrom. A DFB-LD can be used as the light source. If the optical power to be sent from the light source is insufficient, the optical amplifier circuit 15 is added to the transmission circuit. The optical signal from the transmission circuit is transmitted to the optical signal transmission path 85 through the output terminal 68.

The optical signal receiver is connected to the opposite end of the optical signal transmission path 85, and receives an optical signal. The optical signal transmitter 10 pre-adds such an opposite distortion as to offset a distortion generated by, for example, an FM batch conversion circuit to the optical signal. Therefore, a wide-band signal, such as a video signal, having less distortion can be obtained by allowing the optical signal receiver connected to the optical signal transmitter to subject the wide-band signal to frequency demodulation.

Preferably, herein, the phase of an electric signal or the phase of a distortion in the distortion generator circuit 16, the combining distributor 52, the distributor 57, the differential combiner 60, the distributor 67, or the second FM demodulation circuit 95 is set to perform such a feed-back operation as to reduce a distortion by means of the control circuit 56 or 61, without being limited to the phase mentioned in the foregoing embodiments.


(Fifteenth Embodiment)

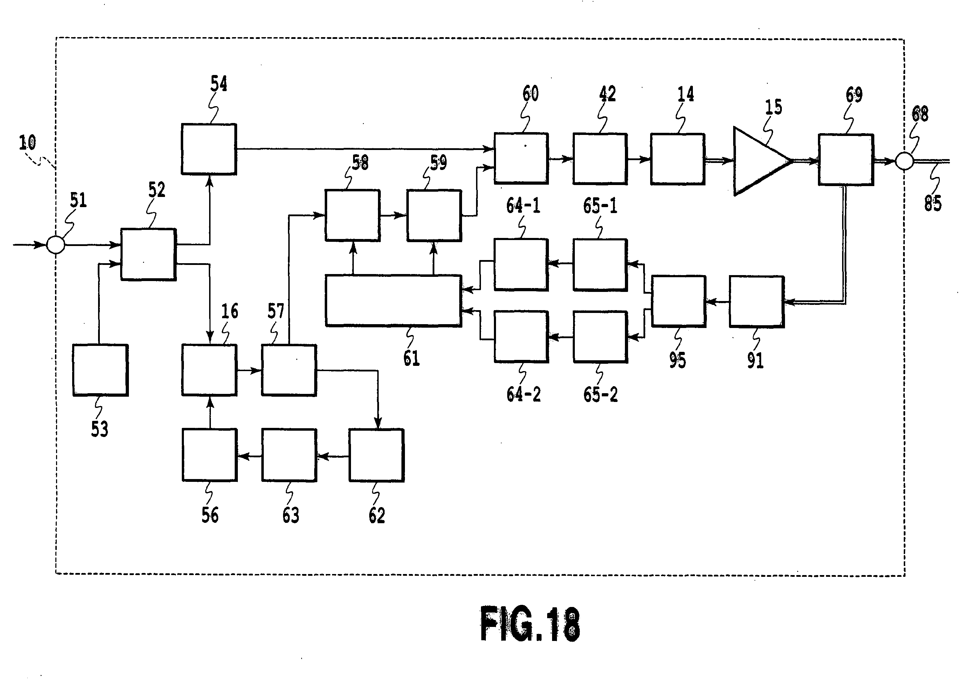

This embodiment is concerned with an optical signal transmitter that uses the distortion generator circuit described in each of the first to eighth embodiments Fig. 18 shows a configuration of an optical signal transmitter according to this embodiment. The optical signal transmitter 10 of Fig. 18 includes a light source 14 serving as a transmission circuit, an optical amplifier circuit 15, a distortion generator circuit 16 which is any one of the distortion generator circuits described in the first to eighth embodiments, a second FM batch conversion circuit 42, an input terminal 51, a combining distributor 52, a pilot signal oscillator 53, a delay line 54, a control circuit 56 serving as a first control circuit, a distributor 57 serving as a first distributor, an amplitude adjuster 58 serving as a part of an amplitude-delay adjuster, a delay adjuster 59 serving as a part of the amplitude-delay adjuster, a differential combiner 60, a control circuit 61 serving as a second control circuit, a band-pass filter 62 serving as a first band-pass filter, a level detector 63 serving as a first level detector, a level detector 64-1 serving as a second level detector, a level detector 64-2 serving as a third level detector, a band-pass filter 65-1 serving as a secondband-pass filter, a band-pass filter 65-2 serving as a thirdband-pass filter, anoutput terminal 68, anoptical splitter 69, a photoelectric conversion circuit 91, and an FM demodulation circuit 95. The optical signal transmitter 10 including these elements transmits an optical signal to an optical signal transmission path 85.

In Fig. 18, the pilot signal oscillator 53 outputs a pilot signal having a frequency fo. The frequency fo is set to be a frequency of a frequency band that is not used as a video channel. In other words, the frequency fo is set to be included in a frequency range of input frequency-multiplexed AM and QAM video signals and to be a frequency of a frequency channel where these video signals are not placed. Additionally, a frequency $3\times$fo of a higher harmonic wave that is three times as high as the frequency fo is set to be included in a frequency range of AM and QAM video signals. For example, the frequency $3\times$fo is set to be included in a range of from 93 MHz to 747 MHz, which is a frequency range of the input frequency-multiplexed AM and QAM video signals.

A wide-band signal, such as a video signal, passes through the input terminal 51, and is input into the combining distributor 52. The combining distributor 52 combines the input electric signal and a pilot signal emitted from the pilot signal oscillator, and distributes a combined signal into two electric signals one of which is output to the distortion generator circuit 16 and the other one of which is output to the delay line 54. The delay line 54 delays the other output emitted from the combining distributor 52, and outputs this to the differential combiner 60. On the other hand, the distortion generator circuit 16 is any one of the distortion generator circuits described in the first to eighth embodiments. The distortion generator circuit 16 generates a distortion from the input signal, and outputs this to the distributor 57. The distributor 57 distributes the output emitted from the distortion generator circuit 16 into two electric signals one of which is output to the amplitude adjuster 58 and the other one of which is output to the band-pass filter 62 . The band-pass filter 62 allows an electric signal having a frequency fo emitted from one output of the distributor 57 to pass therethrough, and outputs this to the level detector 63. The level detector 63 detects a signal level from the output of the band-pass filter 62, and outputs this to the control circuit 56.

The control circuit 56 controls an amplitude-delay adjustment circuit included in the distortion generator circuit 16 so that the output from the level detector 63 becomes minimum. To control the amplitude-delay adjustment circuit of the distortion generator circuit 16, adjustment amounts to control the amplitude amount and the delay amount are respectively input from the control circuit 56 as external inputs into the amplitude control terminal 101 of the amplitude adjustment circuit 38 and into the delay control terminal 102 of the delay adjustment circuit 39 of the distortion generator circuit 16 shown in Fig. 20 to Fig. 23. According to this control method, the set point of the amplitude amount and the set point of the delay amount of the amplitude-delay adjustment circuit of the distortion generator circuit 16 are alternately changed by slight degrees, and are controlled so that the output from the level detector 63 becomes minimum. The component of the frequency fo is removed from the output of the distortion generator circuit 16 by always or intermittently performing this control. In the distortion generator circuit, this control makes it possible to generate such an optimum amount of opposite distortion as to offset a distortion generated in, for example, an FM batch conversion circuit.

The other output of the distributor 57 is input to the amplitude adjuster 58. The amplitude adjuster 58 adjusts the amplitude amount, and outputs the amplitude-adjusted signal to the delay adjuster 59. The delay adjuster 59 adjusts the delay amount, and outputs the delay-adjusted signal to the differential combiner 60. Since both the amplitude adjuster 58 and the delay adjuster 59 are linear circuits, the arrangement order of these adjusters may be reversed. Additionally, since the amplitude adjuster 58 and the delay adjuster 59 adjust the amplitude and the delay of the input to the differential combiner 60, these adjusters 58 and 59 may be disposed on the side of the delay line 54 so that the delay line 54 and its function degenerate.

The differential combiner 60 combines the output from the delay line 54 and the output from the delay adjuster 59 in the state of mutually opposite phases, and outputs this to the second FM batch conversion circuit 42. The second FM batch conversion circuit 42 subjects the output emitted from the differential combiner 60 to frequency modulation, and outputs this to the light source 14. The light source 14 serving as a transmission circuit subjects the output emitted from the second FM batch conversion circuit 42 to intensity modulation, and outputs an intensity-modulated optical signal therefrom. A DFB-LD can be used as the light source. If the optical power to be sent from the light source is insufficient, the optical amplifier circuit 15 is added to the transmission circuit. The optical signal from the transmission circuit is output to the optical splitter 69, and a part of the signal is transmitted to the optical signal transmission path 85 through the output terminal 68.

The other optical signal from the optical splitter 69 is input into the photoelectric conversion circuit 91, and is converted into an electric signal. The photoelectric conversion circuit 91 outputs the converted electric signal to the second FM demodulation circuit 95. The second FM demodulation circuit 95 subjects the input electric signal to frequency demodulation, and outputs two frequency-demodulated electric signals. The two outputs emitted from the second FM demodulation circuit 95 are input into the band-pass filters 65-1 and 65-2, respectively. The band-pass filter 65-1 allows an electric signal having a frequency $2 \times$fo to pass therethrough, whereas the band-pass filter 65-2 allows an electric signal having a frequency 3xfo to pass therethrough. The outputs from the band-pass filters 65-1 and 65-2 are input into the level detectors 64-1 and 64-2, respectively. The level detectors 64-1 and 64-2 detect the signal level of the frequency $2 \times$fo and the signal level of the frequency $3 \times$fo and outputs these to the control circuit 61.

The control circuit 61 controls the amplitude adjustment circuit 58 and the delay adjustment circuit 59 so that the outputs from the level detectors 64-1 and 64-2 become minimum. According to this control method, the set point of the amplitude amount of the amplitude adjustment circuit 58 and the set point of the delay amount of the delay adjustment circuit 59 are alternately changed by slight degrees, and are controlled so that the output from the level detector 64-1 becomes minimum. Thereafter, again, the set point of the amplitude amount of the amplitude adjustment circuit 58 and the set point of the delay amount of the delay adjustment circuit 59 are alternately changed by slight degrees, and are controlled so that the output from the level detector 64-2 becomes minimum. When this control is always or intermittently performed, the component of the frequency $2 \times$fo and the component of the frequency $3 \times$fo become minimum in the output emitted from the FM demodulation circuit in the optical signal receiver connected to the optical signal transmitter 10. A wide-band signal, such as a video signal, having such an optimum amount of opposite distortion as to offset a distortion generated in, for example, an FM batch conversion circuit can be output by performing this control. That is, according to this control method, distortion compensation can be automatically made by pre-distortion.

The optical signal receiver is connected to the opposite end of the optical signal transmission path 85, and receives an optical signal. The optical signal transmitter 10 pre-adds such an opposite distortion as to offset a distortion generated by, for example, an FM batch conversion circuit to the optical signal. Therefore, a wide-band signal, such as a video signal, having less distortion can be obtained by allowing the optical signal receiver connected to the optical signal transmitter to subject the wide-band signal to frequency demodulation.

Preferably, herein, the phase of an electric signal or the phase of a distortion in the distortion generator circuit 16, the combining distributor 52, the distributor 57, the differential combiner 60, or the second FM demodulation circuit 95 is set to perform such a feed-back operation as to reduce a distortion by means of the control circuit 56 or 61, without being limited to the phase mentioned in the foregoing embodiments.

(Sixteenth Embodiment)

This embodiment is concerned with an optical signal transmission systemmade up of any one of the optical signal transmitters described in the thirteenth to fifteenth embodiments and an optical signal receiver including a photoelectric conversion circuit connected to the optical signal transmitter through an optical signal transmission path and an FM demodulation circuit that subjects the output emitted from the photoelectric conversion circuit to frequency demodulation.

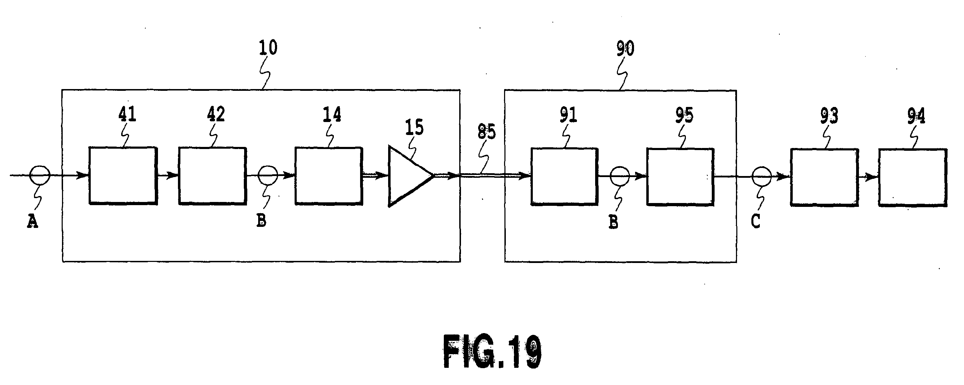

Fig. 19 shows a configuration of an optical signal transmission system made up of the optical signal transmitter including the pre-distortion circuit described in the foregoing embodiments and the optical signal receiver including the photoelectric conversion circuit connected to the optical signal transmitter through the optical signal transmission path and the FM demodulation circuit that subjects the output emitted from the photoelectric conversion circuit to frequency demodulation.

The optical signal transmission system of Fig. 19 is made up of the optical signal transmitter 10 including the second FM batch conversion circuit 42, the light source 14 serving as a transmission circuit, the optical amplifier circuit 15, and the pre-distortion circuit 41, the optical signal receiver 90 including the optical signal transmission path 85, the photoelectric conversion circuit 91, and the second FM demodulation circuit 95, a set-top box 93, and a television receiver 94.

When a wide-band signal, such as a video signal, is input into the pre-distortion circuit 41, a distortion opposite to a distortion generated in, for example, the second FM batch conversion circuit 42 is pre-added to the wide-band signal. The wide-band signal to which the opposite distortion has been pre-added passes through the second FM batch conversion circuit 42, the light source 14 serving as a transmission circuit, and the optical amplifier circuit 15 which is provided if necessary, and is transmitted to the optical signal transmission path 85 in the form of an optical signal.

The optical signal from the optical signal transmission path 85 is received by the photoelectric conversion circuit 91 of the optical receiver 90, and is subjected to frequency demodulation by the second FM demodulation circuit 95. While the wide-band signal is being propagated, a distortion is added to the wide-band signal to which the opposite distortion has been pre-added, thus canceling (i.e., offsetting) the distortion.

Therefore, in the optical signal transmission system according to this embodiment, a wide-band signal having less distortion can be transmitted.

The same effect can be obtained even if the optical signal transmitter described in the fourteenth or fifteenth embodiment, instead of the optical signal transmitter of Fig. 19, is applied.

As described above, according to the distortion generator circuit, the pre-distortion circuit, the optical signal transmitter, and the optical signal transmission system of the present invention, the distortion characteristic can be improved in the transmission of wide-band signals, and the quality of receiving video signals can be heightened. Additionally, the transmission distance can be increased, and the branching ratio of optical branching between the optical signal transmitter and the optical signal receiver can be increased by improving the distortion characteristic when a minimum receiving level is limited by the distortion characteristic.

Industrial Applicability

The distortion generator circuit and the pre-distortion circuit of the present invention can be applied to an optical signal transmitter. The optical signal transmitter and the optical signal transmission system of the present invention can be applied not only to a case in which the network pattern of the optical signal transmission path is a single star type (SS type) topology but also to a case in which the network pattern is a passive double star type (PDS type) topology.

**Claims**

1. A distortion generator circuit that generates a distortion substantially equal to a distortion of an FM batch conversion circuit comprising:

   a distribution circuit that distributes an input electric signal into two electric signals;
   an FM batch conversion circuit that subjects one output emitted from the distribution circuit to frequency modulation and outputs a frequency-modulated signal;
   an FM demodulation circuit that subjects an output emitted from the FM batch conversion circuit to frequency demodulation and outputs a frequency-demodulated signal;
   an amplitude-delay adjustment circuit that subjects the other output emitted from the distribution circuit to amplitude adjustment and delay adjustment and outputs an amplitude-delay-adjusted signal; and
   a combining circuit that combines an output emitted from the FM demodulation circuit and an output emitted from the amplitude-delay adjustment circuit and outputs a combined signal.

2.  The distortion generator circuit of Claim 1, wherein the distribution circuit is a differential distribution circuit that distributes an input electric signal into two electric signals having mutually opposite phases, and the combining circuit is an in-phase combining circuit that subjects the output emitted from the FM demodulation circuit and the output emitted from the amplitude-delay adjustment circuit to in-phase combining and outputs a combined signal.

3.  The distortion generator circuit of Claim 1, wherein the distribution circuit is an in-phase distribution circuit that distributes an input electric signal into two electric signals, and the combining circuit is a differential combining circuit that subjects the output emitted from the FM demodulation circuit and the output emitted from the amplitude-delay adjustment circuit to differential combining and outputs a combined signal.

4.  The distortion generator circuit of Claim 1, further comprising:

    a light source that outputs an optical signal obtained by subjecting the output emitted from the FM batch conversion circuit to intensity modulation; and
    a photoelectric conversion circuit that converts an output of the optical signal emitted from the light source into an electric signal and outputs this electric signal;

    wherein the distribution circuit is a differential distribution circuit that distributes an input electric signal into two electric signals having mutually opposite phases,
    the FM demodulation circuit subj ects an output emitted from the photoelectric conversion circuit to frequency demodulation and outputs a frequency-demodulated signal, and
    the combining circuit is an in-phase combining circuit that subjects the output emitted from the FM demodulation circuit and the output emitted from the amplitude-delay adjustment circuit to in-phase combining and outputs a combined signal.

5.  The distortion generator circuit of Claim 1 further comprising:

    a light source that outputs an optical signal obtained by subjecting the output emitted from the FMbatch conversion circuit to intensity modulation; and
    a photoelectric conversion circuit that converts an output of the optical signal emitted from the light source into an electric signal and outputs this electric signal;

    wherein the distribution circuit is an in-phase distribution circuit that distributes an input electric signal into two electric signals, and the FM demodulation circuit subjects an output emitted from the photoelectric conversion circuit to frequency demodulation and outputs a frequency-demodulated signal, and
    the combining circuit is a differential combining circuit that subjects the output emitted from the FM demodulation circuit and the output emitted from the amplitude-delay adjustment circuit to differential combining and outputs a combined signal.

6.  The distortion generator circuit of any one of Claims 1 to 5, wherein the amplitude-delay adjustment circuit includes an amplitude control terminal that makes amplitude adjustment by control from outside and a delay control terminal that makes delay adjustment by control from outside.

7.  The distortion generator circuit of any one of Claims 1 to 5, wherein the FM batch conversion circuit includes:

    an optical frequency modulation portion that varies an output emitted from the differential distribution circuit or from the in-phase distribution circuit into a modulated input and outputs a frequency-modulated optical signal;
    an optical frequency local oscillation portion that outputs an optical local oscillation signal having an optical frequency away from an optical center frequency of the frequency-modulated optical signal output from the optical frequency modulation portion by a frequency substantially equal to a predetermined intermediate frequency;
    an optical combiner that combines the frequency-modulated optical signal and the optical local oscillation signal and outputs a combined optical signal; and
    an optical detector that subjects the combined optical signal emitted from the optical combiner to heterodyne detection and outputs an electric signal having a frequency equal to a difference between an optical frequency of the frequency-modulated optical signal and an optical frequency of the optical local oscillation signal.

**8.** The distortion generator circuit of any one of Claims 1 to 5, wherein the FM batch conversion circuit includes:

a differential distribution portion that distributes an output emitted from the differential distribution circuit or from the in-phase distribution circuit into two electric signals having mutually opposite phases;

a first optical frequency modulation portion that varies a 0-phase electric signal of the two electric signals having mutually opposite phases emitted from the differential distribution portion into a modulated input and outputs a first frequency-modulated optical signal;

a second optical frequency modulation portion that varies a $\pi$-phase electric signal of the two electric signals having mutually opposite phases emitted from the differential distribution portion into a modulated input and outputs a second frequency-modulated optical signal, the second frequency-modulated optical signal having an optical center frequency away from an optical center frequency of the first frequency-modulated optical signal by a frequency substantially equal to a predetermined intermediate frequency;

an optical combiner that combines the first frequency-modulated optical signal and the second frequency-modulated optical signal and outputs a combined optical signal; and

an optical detector that subjects the combined optical signal emitted from the optical combiner to heterodyne detection and outputs an electric signal having a frequency equal to a difference between an optical frequency of the first frequency-modulated optical signal and an optical frequency of the second frequency-modulated optical signal.

**9.** The distortion generator circuit of any one of Claims 1 to 5, wherein the FM batch conversion circuit includes a voltage-controlled oscillator that converts an output emitted from the differential distribution circuit or from the in-phase distribution circuit into a frequency in accordance with a voltage thereof with a predetermined intermediate frequency as a center frequency and outputs a converted signal.

**10.** The distortion generator circuit of any one of Claims 1 to 5, wherein the FM batch conversion circuit includes:

a differential distribution portion that distributes an output emitted from the differential distribution circuit or from the in-phase distribution circuit into two electric signals having mutually opposite phases;

a first voltage-controlled oscillator that outputs a first frequency-modulated signal obtained by converting one of the two electric signals emitted from the differential distribution portion so as to have a frequency in accordance with a voltage thereof;

a second voltage-controlled oscillator that outputs a second frequency-modulated signal obtained by converting the other one of the two electric signals emitted from the differential distribution portion so as to have a frequency in accordance with a voltage thereof with a frequency away from a center frequency of the first frequency-modulated signal by a frequency substantially equal to a predetermined intermediate frequency as a center frequency of the second frequency-modulated signal;

a mixer that mixes the first frequency-modulated signal emitted from the first voltage-controlled oscillator and the second frequency-modulated signal emitted from the second voltage-controlled oscillator; and

a low-pass filter that allows an electric signal having a frequency equal to a difference between a frequency of the first frequency-modulated signal and a frequency of the second frequency-modulated signal from an output emitted from the mixer to pass therethrough.

**11.** A pre-distortion circuit that compensates for a distortion of an FM batch conversion circuit comprising:

a distributor that distributes an input electric signal into two electric signals;

a delay line that delays one output emitted from the distributor and outputs a delayed signal;

a distortion generator circuit including a distribution circuit that distributes an electric signal whose input is the other output emitted from the distributor into two electric signals, an FM batch conversion circuit that subjects one output emitted from the distribution circuit to frequency modulation and outputs a frequency-modulated signal, an FM demodulation circuit that subject an output emitted from the FM batch conversion circuit to frequency demodulation and outputs a frequency-demodulated signal, an amplitude-delay adjustment circuit that subjects the other output emitted from the distribution circuit to amplitude adjustment and delay adjustment and outputs an adjusted signal, and a combining circuit that combines an output emitted from the FM demodulation circuit and an output emitted from the amplitude-delay adjustment circuit and outputs a combined signal;

a second amplitude-delay adjustment circuit that subjects an output emitted from the distortion generator circuit to amplitude adjustment and delay adjustment and outputs an adjusted signal; and
a combiner that combines an output emitted from the delay line and an output emitted from the second amplitude-delay adjustment circuit and outputs a combined signal;

wherein an in-phase relationship is established between a phase of an electric signal of an output of the pre-distortion circuit and a phase of an electric signal of an input of the pre-distortion circuit.

**12.** The pre-distortion circuit of Claim 11, wherein the distributor is a differential distributor that distributes an input electric signal into two electric signals having mutually opposite phases, and
the distortion generator circuit outputs an anti-phase distortion opposite to a distortion generated by each of the FM batch conversion circuit and the FM demodulation circuit, and
the combiner is a differential combiner that subjects the output emitted from the delay line and the output emitted from the second amplitude-delay adjustment circuit to differential combining and outputs a combined signal.

**13.** The pre-distortion circuit of Claim 11, wherein the distributor is a differential distributor that distributes an input electric signal into two electric signals having mutually opposite phases, and
the distortion generator circuit outputs an in-phase distortion equal to a distortion generated by each of the FM batch conversion circuit and the FM demodulation circuit, and
the combiner is an in-phase combiner that subjects the output emitted from the delay line and the output emitted from the second amplitude-delay adjustment circuit to in-phase combining and outputs a combined signal.

**14.** The pre-distortion circuit of Claim 11, wherein the distributor is an in-phase distributor that distributes an input electric signal into two electric signals, and
the distortion generator circuit outputs an in-phase distortion equal to a distortion generated by each of the FM batch conversion circuit and the FM demodulation circuit, and
the combiner is a differential combiner that subjects the output emitted from the delay line and the output emitted from the second amplitude-delay adjustment circuit to differential combining and outputs a combined signal.

**15.** The pre-distortion circuit of Claim 11, wherein the distributor is an in-phase distributor that distributes an input electric signal into two electric signals, and
the distortion generator circuit outputs an anti-phase distortion opposite to a distortion generated by each of the FM batch conversion circuit and the FM demodulation circuit, and
the combiner is an in-phase combiner that subjects the output emitted from the delay line and the output emitted from the second amplitude-delay adjustment circuit to in-phase combining and outputs a combined signal.

**16.** The pre-distortion circuit of Claim 11, wherein the distortion generator circuit further comprises:

a light source that outputs an optical signal obtained by subjecting the output emitted from the FMbatch conversion circuit to intensity modulation; and
a photoelectric conversion circuit that converts an output of an optical signal emitted from the light source into an electric signal and outputs this electric signal;
and the FM demodulation circuit subjects an output emitted from the photoelectric conversion circuit to frequency demodulation and outputs a frequency-demodulated signal.

**17.** An optical signal transmitter that compensates for a distortion of an FM batch conversion circuit comprising:

a pre-distortion means including a distributor that distributes an input electric signal into two electric signals, a delay line that delays one output emitted from the distributor and outputs a delayed signal, and a distortion generator circuit including a distribution circuit that distributes an electric signal whose input is the other output emitted from the distributor into two electric signals, an FM batch conversion circuit that subjects one output emitted from the distribution circuit to frequency modulation and outputs a frequency-modulated signal, an FM demodulation circuit that subjects an output emitted from the FM batch conversion circuit to frequency demodulation and outputs a frequency-demodulated signal, an amplitude-delay adjustment circuit that subjects the other output emitted from the distribution circuit to amplitude adjustment and delay adjustment and outputs an adjusted signal, and a combining circuit that combines the output emitted from the FM demodulation circuit and the output emitted from the amplitude-delay adjustment circuit and outputs a combined signal;
a second FM batch conversion circuit that subjects an output emitted from the pre-distortionmeans to frequency modulation and outputs a frequency-modulated signal; and

an optical signal transmission circuit that performs intensity modulation by an output emitted from the second FM batch conversion circuit and transmits an intensity-modulated optical signal to an optical signal transmission path.

**18.** The optical signal transmitter of Claim 17, wherein the pre-distortion means further comprises:

a distributor that distributes an input electric signal into two electric signals;
a delay line that delays one output emitted from the distributor and outputs a delayed signal;
a second amplitude-delay adjustment circuit that subjects an output emitted from the distortion generator circuit whose input is the other output emitted from the distributor to amplitude adjustment and delay adjustment and outputs an adjusted signal; and
a combiner that combines an output emitted from the delay line and an output emitted from the second amplitude-delay adjustment circuit and outputs a combined signal;
and an in-phase relationship is established between a phase of an electric signal of an output of the pre-distortion means and a phase of an electric signal of an input of the pre-distortion means.

**19.** The optical signal transmitter of Claim 17, wherein the pre-distortion means further comprises:

a pilot signal oscillator that outputs a pilot signal having a frequency fo;
a combining distributor that combines an input electric signal and a pilot signal emitted from the pilot signal oscillator and distributes a combined signal into two electric signals;
a first distributor that distributes an output emitted from the distortion generator circuit that generates a predetermined distortion from one output emitted from the combining distributor into two electric signals;
a first band-pass filter that allows an electric signal having a frequency fo from one output emitted from the first distributor to pass therethrough;
a first level detector that detects a signal level from an output emitted from the first band-pass filter;
a first control circuit that controls the amplitude-delay adjustment circuit of the distortion generator circuit so that an output emitted from the first level detector becomes minimum;
an amplitude-delay adjuster that subjects the other output emitted from the first distributor to amplitude adjustment and delay adjustment and outputs an adjusted signal;
a delay line that delays the other output emitted from the combining distributor;
a differential combiner that combines the output emitted from the amplitude-delay adjuster and the output emitted from the delay line in a state of mutually opposite phases;
a second distributor that distributes an output emitted from the second FM batch conversion circuit that subjects the output emitted from the differential combiner to frequency modulation and outputs a frequency-modulated signal;
a second FM demodulation circuit that outputs two electric signals obtained by subjecting one output emitted from the second distributor to frequency demodulation;
a second band-pass filter that allows an electric signal having a frequency $2 \times$ fo from one output emitted from the second FM demodulation circuit to pass therethrough;
a second level detector that detects a signal level from an output emitted from the second band-pass filter;
a thirdband-pass filter that allows an electric signal having a frequency $3 \times$ fo from the other output emitted from the second FM demodulation circuit to pass therethrough;
a third level detector that detects a signal level from an output emitted from the third band-pass filter; and
a second control circuit that controls the amplitude-delay adjuster so that an output emitted from the second level detector and/or an output emitted from the third level detector become minimum.

**20.** The optical signal transmitter of Claim 17, wherein the pre-distortion means further comprises:

a pilot signal oscillator that outputs a pilot signal having a frequency fo;
a combining distributor that combines an input electric signal and a pilot signal emitted from the pilot signal oscillator and distributes a combined signal into two electric signals;
a first distributor that distributes an output emitted from the distortion generator circuit that generates a predetermined distortion from one output emitted from the combining distributor into two electric signals;
a first band-pass filter that allows an electric signal having a frequency fo from one output emitted from the first distributor to pass therethrough;
a first level detector that detects a signal level from an output emitted from the first band-pass filter;
a first control circuit that controls the amplitude-delay adjustment circuit of the distortion generator circuit so that an output emitted from the first level detector becomes minimum;

an amplitude-delay adjuster that subjects the other output emitted from the first distributor to amplitude adjustment and delay adjustment and outputs an adjusted signal;

a delay line that delays the other output emitted from the combining distributor;

a differential combiner that combines the output emitted from the amplitude-delay adjuster and the output emitted from the delay line in a state of mutually opposite phases;

a second FM batch converter that subjects the output emitted from the differential combiner to frequency modulation and outputs a frequency-modulated signal;

an optical signal transmission circuit that performs intensity modulation by the output emitted from the second FM batch converter and outputs an intensity-modulated optical signal;

an optical splitter that splits an output of an optical signal emitted from the optical signal transmission circuit into two signals one of which is transmitted to an optical signal transmission path;

a photoelectric conversion circuit that converts an output of the other optical signal emitted from the optical splitter into an electric signal and outputs this electric signal;

a second FM demodulation circuit that outputs two electric signals obtained by subjecting the output emitted from the photoelectric conversion circuit to frequency demodulation;

a second band-pass filter that allows an electric signal having a frequency $2\times$fo from one output emitted from the second FM demodulation circuit to pass therethrough;

a second level detector that detects a signal level from an output emitted from the second band-pass filter;

a thirdband-pass filter that allows an electric signal having a frequency $3\times$fo from the other output emitted from the second FM demodulation circuit to pass therethrough;

a third level detector that detects a signal level from an output emitted from the third band-pass filter; and

a second control circuit that controls the amplitude-delay adjuster so that an output emitted from the second level detector and/or an output emitted from the third level detector become minimum.

21. An optical signal transmission system for transmitting an optical signal of an amplitude-modulated multi-channel video signal that has undergone frequency-division multiplexing comprising:

an optical signal transmitter;

a photoelectric conversion circuit connected to the optical signal transmitter through an optical signal transmission path; and

an optical signal receiver having an FM demodulation circuit that subjects an output emitted from the photoelectric conversion circuit to frequency demodulation;

wherein the optical signal transmitter comprising:

a pre-distortion means including a distributor that distributes an input electric signal into two electric signals, a delay line that delays one output emitted from the distributor and outputs a delayed signal, and a distortion generator circuit including a distribution circuit that distributes an electric signal whose input is the other output emitted from the distributor into two electric signals, an FM batch conversion circuit that subjects one output emitted from the distribution circuit to frequency modulation and outputs a frequency-modulated signal, an FM demodulation circuit that subjects an output emitted from the FM batch conversion circuit to frequency demodulation and outputs a frequency-demodulated signal, an amplitude-delay adjustment circuit that subjects the other output emitted from the distribution circuit to amplitude adjustment and delay adjustment and outputs an adjusted signal, and a combining circuit that combines the output emitted from the FM demodulation circuit and the output emitted from the amplitude-delay adjustment circuit and outputs a combined signal;

a second FM batch conversion circuit that subjects an output emitted from the pre-distortion means to frequency modulation and outputs a frequency-modulated signal; and

an optical signal transmission circuit that performs intensity modulation by an output emitted from the second FM batch conversion circuit and transmits an intensity-modulated optical signal to an optical signal transmission path.

**FIG.1**

FIG.2A

FIG.2B

FIG.2C

FIG.3

**FIG.4**

EP 1 655 866 A1

**FIG.5**

EP 1 655 866 A1

FIG.6

FIG.7

**FIG.8**

EP 1 655 866 A1

FIG. 9

FIG.10

**FIG.11**

**FIG.12**

EP 1 655 866 A1

FIG.13

EP 1 655 866 A1

**FIG.14**

FIG.15

**FIG.16**

**FIG.17**

EP 1 655 866 A1

**FIG.18**

EP 1 655 866 A1

FIG.19

**FIG.20**

FIG.21

**FIG.22**

FIG.23

## INTERNATIONAL SEARCH REPORT

| | International application No. |
|---|---|
| | PCT/JP2004/011553 |

**A. CLASSIFICATION OF SUBJECT MATTER**
    Int.Cl⁷  H04B10/18, H04B10/04

According to International Patent Classification (IPC) or to both national classification and IPC

**B. FIELDS SEARCHED**

Minimum documentation searched (classification system followed by classification symbols)
    Int.Cl⁷  H04B10/00-10/28, H04J14/00-14/08

Documentation searched other than minimum documentation to the extent that such documents are included in the fields searched
    Jitsuyo Shinan Koho            1922-1996    Toroku Jitsuyo Shinan Koho    1994-2004
    Kokai Jitsuyo Shinan Koho     1971-2004    Jitsuyo Shinan Toroku Koho    1996-2004

Electronic data base consulted during the international search (name of data base and, where practicable, search terms used)
    JOIS (JICST FILE)

**C. DOCUMENTS CONSIDERED TO BE RELEVANT**

| Category* | Citation of document, with indication, where appropriate, of the relevant passages | Relevant to claim No. |
|---|---|---|
| Y<br>X | Koji KIKUJIMA et al., "AM/FM Ikkatsu Henkangata Hikari Eizo Denso System ni okeru Yugami Yoin to Taisaku", The Institute of Electronics, Information and Communication Engineers Gijutsu Kenkyu Hokoku, OCS, Vol.96, No.59, pages 43 to 48, 23 May, 1996 (23.05.96) | 1-20<br>21 |
| Y<br>X | JP 09-326769 A  (Nippon Telegraph And Telephone Corp.), 16 December, 1997 (16.12.97), Full text; all drawings & EP 00080315 A Full text; all drawings & US 005896216 A          & DE 069624680 A | 1-20<br>21 |

| ☒ | Further documents are listed in the continuation of Box C. | ☐ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 09 November, 2004 (09.11.04) | 22 November, 2004 (22.11.04) |

| Name and mailing address of the ISA/ | Authorized officer |
|---|---|
| Japanese Patent Office | |
| Facsimile No. | Telephone No. |

Form PCT/ISA/210 (second sheet) (January 2004)

# EP 1 655 866 A1

<table>
<tr><td colspan="2" align="center"><strong>INTERNATIONAL SEARCH REPORT</strong></td><td>International application No.<br>PCT/JP2004/011553</td></tr>
</table>

C (Continuation).  DOCUMENTS CONSIDERED TO BE RELEVANT

| Category* | Citation of document, with indication, where appropriate, of the relevant passages | Relevant to claim No. |
|---|---|---|
| Y | JP 2000-349560 A  (Matsushita Electric Industrial Co., Ltd.), 15 December, 2000 (15.12.00), Full text; all drawings & EP 001041749 A Full text; all drawings & US 0066558216 B | 10 |
| Y | JP 2000-022641 A  (Hitachi Cable, Ltd.), 21 January, 2000 (21.01.00), Full text; all drawings (Family: none) | 19,20 |

Form PCT/ISA/210 (continuation of second sheet) (January 2004)